(19) **Europäisches Patentamt / European Patent Office / Office européen des brevets**

(11) **EP 3 460 016 B1**

(12) **EUROPEAN PATENT SPECIFICATION**

(45) Date of publication and mention
of the grant of the patent:
**12.11.2025 Bulletin 2025/46**

(21) Application number: **17799438.1**

(22) Date of filing: **17.05.2017**

(51) International Patent Classification (IPC):
**B32B 27/00** *(2006.01)* **B32B 27/30** *(2006.01)*
**C09J 153/02** *(2006.01)* **C09J 7/22** *(2018.01)*
**C09J 7/38** *(2018.01)*

(52) Cooperative Patent Classification (CPC):
**C09J 7/22; B32B 27/00; B32B 27/30; C09J 7/387;**
**C09J 153/02;** C09J 2433/006; C09J 2453/00

(86) International application number:
**PCT/JP2017/018562**

(87) International publication number:
**WO 2017/200014 (23.11.2017 Gazette 2017/47)**

(54) **LAYERED PRODUCT**

SCHICHTPRODUKT

PRODUIT STRATIFIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.05.2016 JP 2016099236**

(43) Date of publication of application:
**27.03.2019 Bulletin 2019/13**

(73) Proprietor: **Kuraray Co., Ltd.**
**Okayama 710-0801 (JP)**

(72) Inventors:
 • **NAKANO, Kirihiro**
 **Tsukuba-shi**
 **Ibaraki 305-0841 (JP)**
 • **ENOMOTO, Keisuke**
 **Tsukuba-shi**
 **Ibaraki 305-0841 (JP)**
 • **HASHIMOTO, Ryota**
 **Tsukuba-shi**
 **Ibaraki 305-0841 (JP)**

 • **KONDOU, Yoshirou**
 **Tsukuba-shi**
 **Ibaraki 305-0841 (JP)**
 • **MUKOO, Yoshiki**
 **Tsukuba-shi**
 **Ibaraki 305-0841 (JP)**
 • **SASAKI, Hiromitsu**
 **Kamisu-shi**
 **Ibaraki 314-0197 (JP)**

(74) Representative: **Müller-Boré & Partner**
**Patentanwälte PartG mbB**
**Friedenheimer Brücke 21**
**80639 München (DE)**

(56) References cited:
| | |
|---|---|
| EP-A1- 3 251 840 | WO-A1-2013/105392 |
| WO-A1-2014/087815 | WO-A1-2014/156651 |
| WO-A1-2014/167868 | WO-A1-2016/121868 |
| JP-A- 2011 016 860 | JP-A- 2012 236 901 |
| JP-A- 2015 054 954 | JP-A- H01 223 185 |
| JP-A- S61 215 682 | US-A1- 2003 211 308 |
| US-A1- 2014 057 091 | |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical Field**

The present disclosure relates to a layered product comprising a base layer and a pressure sensitive adhesive layer, characterized in that an aromatic vinyl compound polymer block (S) forms a membrane structure phase along the interface of the base layer and the pressure sensitive adhesive layer, thereby closely adhering the base layer and the pressure sensitive adhesive layer to each other.

**Background Art**

Components with excellent durability, heat resistance and mechanical strength are widely used for a variety of applications including building materials, aircraft components, automotive components, household appliances and mobile devices. For materials of such components, ceramics, metals, synthetic resins, fiber reinforced resins and the like are selected. Components comprising these materials may be used for applications, such as exterior finishes of household appliances and interior finishes of automobiles.

For example, in applications such as exterior finishes of mobile devices and exterior or interior finishes of automobiles, a film provided with a pressure sensitive adhesive layer is often adhered to the surface of the component, which is an adherend. Examples of its purposes include decoration with patterns, such as wood grain, and impartment of design with glossy surfaces, such as metallic and piano black tones. Impartment of functionalities, such as scratch resistance, weatherability and chemical resistance, are also included.

Accordingly, in a layered product that functions as the film provided with a pressure sensitive adhesive layer mentioned above, synthetic resins are frequently used onto a base layer or the outermost surface of the layered product. Such synthetic resins are required to satisfy functions, such as scratch resistance, weatherability and chemical resistance. In addition, for the pressure sensitive adhesive layer, pressure sensitive adhesiveness to both of the base comprising synthetic resins and the adherend is required. Furthermore, polarities of the base and the adherend are often different, and therefore, pressure sensitive adhesiveness to both polar and nonpolar materials is required in the pressure sensitive adhesive layer.

As a method of adhering a decorative film to an adherend having a three dimensional shape, for example, a film insert molding method is used. In such a method, before performing injection molding, the decorative film is installed in the metal mold. In this method, the decorative film needs to be shaped in advance to fit the shape of the metal mold. It is also hard for this method to be applied to an adherend comprising metals, thermosetting resins or the like. Examples of other decorating methods that solve these problems include vacuum molding, such as three dimensional surface decorative molding. However, this method demands coating of a pressure sensitive adhesive, thereby presenting an issue in productivity.

In order to solve issues described above, for example, Patent Literature 1 proposes a method of producing a molded product in which a special film is used for insert molding. Such a film comprises a thermoplastic polymer composition. However, such a film has extremely poor followability to an adherend with a three dimensional shape in vacuum molding. Therefore, problems exist, such as occurrence of breaks or wrinkles of the film.

Upon this, Patent Literature 2, for example, proposes a multilayer film. The multilayer film has a film comprising a methacrylic resin composition and a film comprising an acrylic block copolymer. Here, the methacrylic resin composition contains a block copolymer and a methacrylic resin. The film comprising an acrylic block copolymer has a high toughness, as well as a high adhesiveness to the film comprising a methacrylic resin composition. However, such a multilayer film has a low adhesiveness to nonpolar resins.

As a multilayer film having a nonpolar resin, Patent Literature 3, for example, discloses a multilayer article including (i) a polycarbonate layer, (ii) a polypropylene layer and (iii) a pressure sensitive adhesive layer. Here, the pressure sensitive adhesive layer includes a copolymer including structural units derived from one or more alkenyl aromatic compounds and one or more conjugated dienes. Similarly, a pre assembly including any of the polycarbonate layer and the polypropylene layer in addition to the pressure sensitive adhesive layer is also disclosed.

Patent Literatures 4 and 5 disclose methods of laminating a pressure sensitive adhesive layer comprising an ethylene copolymer, a tackifier and a block copolymer, and a resin layer onto an adherend by a coextrusion lamination method. The pressure sensitive adhesive layer is believed to be excellent in adhesiveness to the resin layer and the adherend, mainly because of actions of the tackifier.

WO 2014/156651 A1 describes a laminate, a protective film and a method for manufacturing the laminate. JP 2012-236901 A describes a block copolymer for a tacky adhesive, a tacky adhesive composition and a surface-protective film. WO 2014/087815 A1 describes an adhesive composition for a protective film of a coated surface and a method for preparing the same. US 2003/0211308 A1 describes an adhesive for bonding to low surface energy surfaces.

**Citation List**

**Patent Literature**

Patent Literature 1: Japanese Unexamined Patent Application Publication No. 2014-168940

Patent Literature 2: Japanese Unexamined Patent Application Publication No. 2012-213911

Patent Literature 3: Published Japanese Translation of PCT International Publication for Patent Application, No. 2007-507374

Patent Literature 4: Japanese Unexamined Patent Application Publication No. H11-131037

Patent Literature 5: Japanese Unexamined Patent Application Publication No. H11-286871

**Summary of Invention**

**Technical Problem**

The object of the present disclosure is, in providing a layered product having a base layer and a pressure sensitive adhesive layer, to provide a layered product excellent in pressure sensitive adhesiveness to both polar and nonpolar materials while ensuring a strong, pressure sensitive adhesiveness between the base layer and the pressure sensitive adhesive layer.

**Solution to Problem**

The present invention provides a layered product as defined in appended independent claim 1, as well as a method of producing a layered product as defined in appended independent claim 12. Specific embodiments thereof are defined in the appended dependent claims.

**Advantageous Effects of Invention**

A layered product of the present disclosure has a base layer and a pressure sensitive adhesive layer, and a membrane structure comprising an aromatic block from the pressure sensitive adhesive layer is formed in the vicinity of their interface. Because of this, the compatibility (adherence, wettability) between the base layer and the pressure sensitive adhesive layer can be enhanced. Moreover, the layered product of the present disclosure can be suitably used as a film provided with a pressure sensitive adhesive layer for sticking onto the surface of components, such as building materials, aircraft components, automotive components, household appliances and mobile devices.

**Brief Description of the Drawings**

Fig. 1 is a perspective view representing one embodiment of a layered product of the present disclosure;
Fig. 2A is an image of a cross section of a layered product of Example 1A, taken by TEM;
Fig. 2B is an image of a cross section of a layered product of Example 1B, taken by TEM;
Fig. 3A is an image of a cross section of a layered product of Example 2, taken by TEM;
Fig. 3B is an image of a cross section of a layered product of Example 3A, taken by TEM;
Fig. 3C is an image of a cross section of a layered product of Example 3B, taken by TEM;
Fig. 4 is an image of a cross section of a layered product of Example 4, taken by TEM;
Fig. 5 is an image of a cross section of a layered product of Example 6, taken by TEM;
Fig. 6 is an image of a cross section of a layered product after TOM molding in Example 8, taken by TEM;
Fig. 7 is an image of a cross section of a layered product of Example 10, taken by TEM;
Fig. 8 is an image of a cross section of a layered product of Example 11, taken by TEM;
Fig. 9 is an image of a cross section of a layered product of Reference Example 1, taken by TEM; and
Fig. 10 is an image of a cross section of a layered product of Reference Example 3, taken by TEM.

## Description of Embodiments

[General description of layered product]

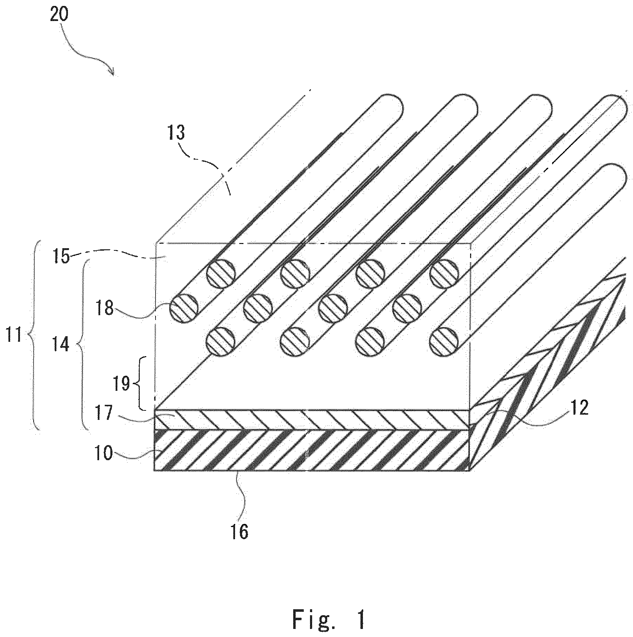

As shown in Fig. 1, a layered product of the present disclosure (layered product 20) comprises a base layer 10 having polarity and a pressure sensitive adhesive layer 11 containing a block copolymer (A). The figure is only an illustration for understanding each steric structure that the layered product of the present disclosure comprises, and does not limit the present disclosure.

The layered product of the present disclosure is characterized by that a membrane structure phase 17 comprising an aromatic vinyl compound polymer block (S) resulting from the block copolymer (A) is formed along the base layer 10 having polarity, at the interface between the base layer 10 and the pressure sensitive adhesive layer 11.

It is preferable that the membrane structure phase 17 according to the present disclosure be formed along the base layer 11 having polarity because the compatibility between the base layer 10 and the pressure sensitive adhesive layer 11 is enhanced, thereby improving the pressure sensitive adhesiveness.

(Specifications of membrane structure phase)

It is preferable that the thickness of the membrane structure phase 17 according to the present disclosure be smaller than the diameter size of a circular cross section structure 18 in the aromatic vinyl compound polymer block (S) resulting from a microphase separated structure of the block copolymer (A).

The circular cross section structure 18 according to the present disclosure refers to a spherical phase or a cylindrical phase in the aromatic vinyl compound polymer block (S). These phases result from the microphase separated structure of the block copolymer (A).

Other than the above, the diameter of the circular cross section structure 18 is not particularly limited. The diameter of the circular cross section structure 18 depends on the molecular weight of the aromatic vinyl compound polymer block (S) and a conjugated diene compound polymer block (D), for example, the weight average molecular weight in terms of polystyrene determined by gel permeation chromatography (GPC) measurement.

The thickness of the membrane structure phase 17 according to the present disclosure can be controlled by selecting materials for formation of the membrane structure phase 17 and imparting heat to the materials. Resulting from the microphase separated structure of the block copolymer (A), the aromatic vinyl compound polymer block (S) spreads over the interface with the base layer 11 having polarity. Therefore, in association with the selection of appropriate materials and the impartment of heat to the materials, the thickness of the membrane structure phase 17 becomes necessarily smaller than the diameter size of the circular cross section structure 18.

It is preferable that an aromatic phase 14 comprising the block copolymer (A) according to the present disclosure have a phase 15 adjoining the membrane structure phase 17 because this is useful for improvement of the pressure sensitive adhesiveness between the base layer 10 and the pressure sensitive adhesive layer 11. Here, the circular cross section structure 18 in the aromatic vinyl compound polymer block (S) resulting from the block copolymer (A) is scarce in the phase 15.

[Details of layered product]

A layered product 20 shown in Fig. 1 comprises a base layer 10 comprising a polar resin and a pressure sensitive adhesive layer 11 containing a block copolymer (A).

The pressure sensitive adhesive layer 11 shown in Fig. 1 is in contact with the surface of the base layer 10. The pressure sensitive adhesive layer 11 comprises a thermoplastic elastomer containing the block copolymer (A). The block copolymer (A) contains an aromatic vinyl compound polymer block (S) and a conjugated diene compound polymer block (D). The block copolymer (A) is a hydrogenated product or a non-hydrogenated product.

An aromatic phase 14 shown in Fig. 1 forms a membrane structure 17 and a circular cross section structure 18. The membrane structure 17 is the aromatic vinyl compound polymer block (S) aggregating in the vicinity of an interface 12. The membrane structure 17 is formed along the interface 12. The membrane structure 17 refers to a membranous phase among a microphase separated structure composed of the aromatic vinyl compound polymer block (S). Due to the presence of the membrane structure 17, the pressure sensitive adhesive layer 11 has an improved compatibility with the base layer 10 at the interface 12, thereby improving the pressure sensitive adhesiveness between the pressure sensitive adhesive layer 11 and the base layer 10.

[Method of confirming membrane structure]

The presence of a membrane structure 17 shown in Fig. 1 can be confirmed by visual observation or examination against an exposed interface 12, and a method for this is not particularly limited. Examples of such a confirmation method include, for example, observation with a transmission electron microscope (TEM) or analysis with secondary ion mass spectrometry (SIMS). The SIMS may be dynamic SIMS or static SIMS. Among these, the observation with TEM is preferred.

In the observation with TEM, a cross section of a layered product 20 is stained with ruthenium oxide or the like, and the cross section is visually observed using TEM.

In the analysis with SIMS, a base layer 10 and a pressure sensitive adhesive layer 11 are separated at an interface 12, and then the side of the pressure sensitive adhesive layer 11 on which the interface 12 has been formed is analyzed. At this time, only the surface that has formed the interface 12 may be analyzed, or the analysis may be conducted while digging into the inside of the pressure sensitive adhesive layer 11 from the surface with a sputter ion gun. When only the surface that has formed the interface 12 is analyzed via SIMS, the presence of the membrane structure 17 can be confirmed by a higher concentration of an aromatic vinyl compound polymer block (S) in analyzing the interface 12 relative to a concentration of the aromatic vinyl compound polymer block (S) in analyzing the surface of a film comprising the same composition as that forming the pressure sensitive adhesive layer 11. On the other hand, when the analysis is conducted via SIMS while digging into the inside of the pressure sensitive adhesive layer 11 with a sputter ion gun, in its depth profile, the presence of the membrane structure 17 can be confirmed by a higher concentration of an aromatic vinyl compound polymer block (S) at the interface 12 relative to a concentration of the aromatic vinyl compound polymer block (S) at the inside of the pressure sensitive adhesive layer 11.

In the pressure sensitive adhesive layer 11 shown in Fig. 1, the aromatic vinyl compound polymer block (S) and a conjugated diene compound polymer block (D) may generate microphase separation, allowing the presence of a phase 14 comprising the aromatic vinyl compound polymer block (S) (hereinafter, referred to as an "aromatic phase 14") and a phase 15 comprising the conjugated diene compound polymer block (D) (hereinafter, referred to as a "diene phase 15"). In other words, in the pressure sensitive adhesive layer 11, while each molecule of the block copolymer (A) is retaining bonds between the aromatic vinyl compound polymer block (S) and the conjugated diene compound polymer block (D), aromatic vinyl compound polymer blocks (S) and conjugated diene compound polymer blocks (D) accumulate on their own between molecules of the block copolymer (A), leading to at least partial phase separation between a phase comprising the aromatic vinyl compound polymer block (S) and a phase comprising the conjugated diene compound polymer block (D). Conditions for formation of such a microphase separated structure will be described later.

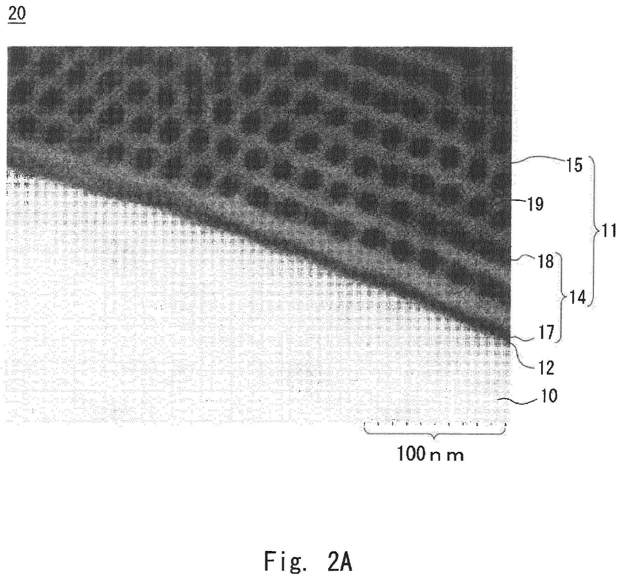

A circular cross section structure 18 shown in Fig. 1 refers to a columnar or spherical phase among the aromatic phase 14. Note that the columnar or spherical phase is a structure seen in a cross sectional image of the layered product 20 shown in Fig. 2A. Fig. 2A is an image of a cross section of the layered product 20, taken by TEM (a transmission electron microscope). The length in the longitudinal direction of the circular cross section structure 18 is not limited. Therefore, a structure judged to be rather spherical due to its short length is also included in the circular cross section structure 18. The shape of a cross section of the circular cross section structure 18 is not limited to a perfect circle.

The diene phase 15 shown in Fig. 1 does not take a particular structure. The circular cross section structure 18 may be dispersed or unevenly distributed within the diene phase 15. Moreover, the pressure sensitive adhesive layer 11 may have a region 19 in the diene phase 15, in which the circular cross section structure 18 is scarce. In the region 19, the diene phase 15 is dominant to the aromatic phase 14. The region 19 is located in the vicinity of the membrane structure 17. The region 19 is located between a region in which the circular cross section structure 18 is abundant and the membrane structure 17.

The layered product 20 shown in Fig. 1 adheres to an adherend via the pressure sensitive adhesive layer 11. Such a layered product 20 has a good covering formability to an adherend having a three dimensional curved surface. In other words, it is easy to perform secondary formation, such as vacuum molding or pressure forming, to such a layered product 20.

[Composition of pressure sensitive adhesive layer]

According to the present invention, a pressure sensitive adhesive layer 11 shown in Fig. 1 contains greater than 50 mass% of a block copolymer (A). The content of the block copolymer (A) may be any of 51, 56, 61, 66, 71, 76, 81, 85, 90, 95, 99 and 100 mass%.

[Composition of block copolymer (A)]

A block copolymer (A) is a constituent of a thermoplastic elastomer.

[Composition of aromatic vinyl compound polymer block (S)]

An aromatic vinyl compound polymer block (S) is a polymer mainly containing structural units derived from an aromatic vinyl compound. Examples of such an aromatic vinyl compound include, for example, styrene, α-methylstyrene, 2-methylstyrene, 3-methylstyrene, 4-methylstyrene, 4-propylstyrene, 4-cyclohexylstyrene, 4-dodecylstyrene, 2-ethyl-4-benzylstyrene, 4-(phenylbutyl)styrene, 1-vinylnaphthalene, 2-vinylnaphthalene and combinations thereof. For such an aromatic vinyl compound, any of styrene, α-methylstyrene, 4-methylstyrene and combinations thereof is preferred. These structural units can make the flowability of the aromatic vinyl compound polymer block (S) suitable.

The composition ratio of structural units derived from the aromatic vinyl compound in the aromatic vinyl compound polymer block (S) is preferably 80 mass% or more, more preferably 90 mass% or more, and further preferably 95 mass% or more. The composition ratio of structural units can be any of 81, 82, 83, 84, 85, 86, 87, 88, 89, 90, 91, 92, 93, 94, 95, 96, 97, 98, 99 and 100 mass%.

The aromatic vinyl compound polymer block (S) may have structural units derived from other copolymerizable compounds. Examples of such other structural units include, for example, 1-butene, pentene, hexene, butadiene, isoprene and methyl vinyl ether.

The composition ratio of structural units derived from other copolymerizable compounds in the aromatic vinyl compound polymer block (S) is 20 mass% or less, more preferably 10 mass% or less, and further preferably 5 mass% or less. Such a composition ratio may be any of 19, 18, 17, 16, 15, 14, 13, 12, 11, 10, 9, 8, 7, 6, 5, 4, 3, 2, 1 and 0 mass%.

[Composition of conjugated diene compound polymer block (D)]

A conjugated diene compound polymer block (D) mainly contains structural units derived from a conjugated diene compound. Examples of structural units of the conjugated diene compound polymer block (D) include, for example, butadiene, isoprene, 2,3-dimethyl-1,3-butadiene, 1,3-pentadiene, 1,3-hexadiene and combinations thereof. For such structural units, at least any one of isoprene and butadiene is preferred. For such structural units, a combination of isoprene and butadiene is more preferred. Moreover, from a viewpoint of suppressing defects or contaminants in a pressure sensitive adhesive layer, it is further preferable that the conjugated diene compound polymer block (D) do not have a polar group.

The composition ratio of structural units derived from the conjugated diene compound in the conjugated diene compound polymer block (D) is preferably 80 mass% or more, more preferably 90 mass% or more, and further preferably 95 mass% or more. The composition ratio described above is a value converted from the charged amount of raw materials. Such a composition ratio of structural units may be any of 81, 82, 83, 84, 85, 86, 87, 88, 89, 90, 91, 92, 93, 94, 95, 96, 97, 98, 99 and 100 mass%.

The conjugated diene compound polymer block (D) may have structural units derived from other copolymerizable compounds. Examples of such other structural units include, for example, styrene, α-methylstyrene and 4-methylstyrene. Note that an aromatic vinyl compound polymer block (S) and the conjugated diene compound polymer block (D) can be distinguished from each other depending on whether structural units derived from an aromatic vinyl compound are dominant, or structural units derived from the conjugated diene compound are dominant in each polymer block.

The composition ratio of other structural units in the conjugated diene compound polymer block (D) is preferably 20 mass% or less, more preferably 10 mass% or less, and further preferably 5 mass% or less. Such a composition ratio may be any of 19, 18, 17, 16, 15, 14, 13, 12, 11, 10, 9, 8, 7, 6, 5, 4, 3, 2, 1 and 0 mass%.

The binding form of structural units in the conjugated diene compound polymer block (D) is not particularly restricted. When the conjugated diene compound is butadiene, 1,2-bond and 1,4-bond may be used. When the conjugated diene compound is isoprene, 1,2-bond, 3,4-bond and 1,4-bond may be used.

In the conjugated diene compound polymer block (D), the proportion of the total amount of 1,2-bond and 3,4-bond to the total amount of 1,2-bond, 3,4-bond and 1,4-bond, that is, a range of the vinylation degree is preferably 1 to 99 mol%, more preferably 10 to 80 mol%, further preferably 30 to 70 mol%, and particularly preferably 40 to 60 mol%. The proportion described above can be any of 10, 20, 30, 40, 50, 60, 70, 80 and 90 mol%.

The ratio of the amount of 1,2-bond and 3,4-bond, as well as 1,4-bond is determined from the $^1$H-NMR spectrum. In the $^1$H-NMR spectrum, a peak resulting from 1,2-bond and 3.4-bond is present in a range of 4.2 to 5.0 ppm. In addition, a peak resulting from 1,4-bond is present in a range of 5.0 to 5.45 ppm. From the ratio of integrated values of these peaks, the ratio of the amount of bonds mentioned above (vinylation degree) is determined.

[Binding form between polymer blocks]

In a block copolymer (A), an aromatic vinyl compound polymer block (S) and a conjugated diene compound polymer block (D) bind to each other. Their binding form is not particularly restricted. That is, the binding form can be linear, branched, radial and any combinations thereof. When a linear binding form is dominant, production of the block copolymer (A) becomes easier.

The block copolymer (A) is classified based on larger block structural units in which the aromatic vinyl compound polymer block (S) and the conjugated diene compound polymer block (D) are combined, as follows. The block copolymer (A) can be any of, for example, a diblock copolymer, a triblock copolymer, a tetrablock copolymer and a pentablock copolymer.

The diblock copolymer is expressed as S-D. S and D stand for the aromatic vinyl compound polymer block (S) and the conjugated diene compound polymer block (D), respectively. Similarly, the triblock copolymer is expressed as S-D-S or D-S-D. The tetrablock copolymer is expressed as S-D-S-D and the like. The pentablock copolymer is expressed as S-D-S-D-S and D-S-D-S-D, etc. Among these, the block copolymer (A) containing triblock copolymers is excellent in stretchability and adhesiveness, and it is also easy to produce such a block copolymer (A). Furthermore, from a viewpoint of handling and film forming properties, those expressed as S-D-S are more preferred.

The block copolymer (A) can further be a $(S-D)_nX$ type copolymer. Here, X denotes a coupling residue and n denotes an integral number of 2 or more. Moreover, the block copolymer (A) can also be a diblock copolymer, a triblock copolymer, a tetrablock copolymer and a pentablock copolymer, a $(S-D)_nX$ type copolymer and mixtures thereof.

[Addition of hydrogen to block copolymer (A)]

A block copolymer (A) is a non-hydrogenated product or a hydrogenated product. In the block copolymer (A), it is preferable that hydrogen be added to a part or all of a conjugated diene compound polymer block (D). Hereinafter, this may be simply referred to as hydrogenation or hydrogenated.

The hydrogenation rate (hydrogen addition rate) in the conjugated diene compound polymer block (D) is preferably 80% or more and more preferably 90% or more. The hydrogenation rate is a value calculated by dividing the iodine value of the conjugated diene compound polymer block (D) after the hydrogenation reaction with the iodine value of the conjugated diene compound polymer block (D) before the hydrogenation reaction. Such a hydrogenation rate may be any of 81, 82, 83, 84, 85, 86, 87, 88, 89, 90, 91, 92, 93, 94, 95, 96, 97, 98, 99 and 100%.

[Component ratio of polymer blocks in block copolymer (A)]

A range of the content (composition ratio) of an aromatic vinyl compound polymer block (S) in a block copolymer (A) is preferably 5 to 75 mass%, more preferably 5 to 60 mass%, further preferably 5 to 40 mass%, and particularly preferably 10 to 40 mass%. Such a range can provide a good flexibility, stretchability and adhesiveness of a pressure sensitive adhesive layer. The content described above may be any of 15, 20, 25, 30, 35, 40, 45, 50, 55, 60, 65 and 70 mass%.

A range of the content (composition ratio) of a conjugated diene compound polymer block (D) in the block copolymer (A) is preferably 60 to 95 mass%. The content of the conjugated diene compound polymer block (D) may be any of 65, 70, 75, 80, 85 and 90 mass%.

[Weight average molecular weight of block copolymer (A)]

Moreover, a range of the weight average molecular weight of a block copolymer (A) is preferably 30,000 to 500,000, more preferably 60,000 to 200,000, and further preferably 80,000 to 180,000. Such a range can provide a good stretchability, adhesiveness and forming processability of a pressure sensitive adhesive layer.

The weight average molecular weight described above can be any of $40 \times 10^3$, $50 \times 10^3$, $60 \times 10^3$, $70 \times 10^3$, $80 \times 10^3$, $90 \times 10^3$, $100 \times 10^3$, $110 \times 10^3$, $120 \times 10^3$, $130 \times 10^3$, $140 \times 10^3$, $150 \times 10^3$, $160 \times 10^3$, $170 \times 10^3$, $180 \times 10^3$, $190 \times 10^3$, $200 \times 10^3$, $300 \times 10^3$ and $400 \times 10^3$. Such a weight average molecular weight is the weight average molecular weight in terms of polystyrene determined by gel permeation chromatography (GPC) measurement.

The block copolymer (A) may have one peak in a weight average molecular weight distribution. Alternatively, two types or more of block copolymers (A) having different weight average molecular weight distributions may be used in combination. In particular, it is preferable that a block copolymer (A) with the weight average molecular weight of 50,000 to 150,000 (hereinafter, referred to as a medium molecular weight product) and a block copolymer (A) with the weight average molecular weight of 150,000 to 300,000 (hereinafter, referred to as a high molecular weight product) be combined. Such a combination can keep the balance of stretchability, adhesiveness and forming processability of the pressure sensitive adhesive layer.

A range of the mass ratio (medium molecular weight product/high molecular weight product) in the combination described above is preferably a range of 10/90 to 90/10, more preferably a range of 20/80 to 75/25, and further preferably a range of 20/80 to 55/45. Such a mass ratio may be any of 15/85, 20/80, 25/75, 30/70, 35/65, 40/60, 45/55, 50/50, 55/45, 60/40, 65/35, 70/30, 75/25, 80/20 and 85/15.

[Method of producing block copolymer (A)]

A method of producing a block copolymer (A) is not particularly limited. For example, the block copolymer (A) can be produced by an anionic polymerization method like the following (i) to (iii): (i) a method in which an aromatic vinyl compound and a conjugated diene compound are sequentially polymerized using an alkyl lithium compound as an initiator; (ii) a method in which, following the polymerization of (i), the polymerized product is further subjected to coupling with the addition of a coupling agent; and (iii) a method in which a conjugated diene compound and an aromatic vinyl compound are sequentially polymerized using a dilithium compound as an initiator.

Examples of the alkyl lithium compound in the methods (i) and (ii) described above include, for example, methyl lithium, ethyl lithium, n-butyl lithium, sec-butyl lithium, tert-butyl lithium and pentyl lithium. Examples of the coupling agent in the method (ii) described above include, for example, dichloromethane, dibromomethane, dichloroethane, dibromoethane and dibromobenzene. In addition, examples of the dilithium compound in (iii) described above include, for example, naphthalene dilithium and dilithiohexylbenzene.

The amount of the initiator, such as alkyl lithium compounds and dilithium compounds, or the coupling agent used may be determined depending on a targeted weight average molecular weight of the block copolymer (A). Relative to the total of 100 parts by mass of the aromatic vinyl compound and the conjugated diene compound, 0.01 to 0.2 part by mass of the initiator may be used. Moreover, 0.001 to 0.8 part by mass of the coupling agent may be used.

It is preferable that the anionic polymerization reaction described above be performed in the presence of a solvent. The type of such a solvent is preferably of those inert to the initiator and not adversely affecting the polymerization reaction. The solvent may be a saturated aliphatic hydrocarbon, such as hexane, heptane, octane and decane; or an aromatic hydrocarbon, such as toluene, benzene and xylene. It is preferable that the polymerization reaction be performed within a temperature range of 0°C to 80°C for 0.5 to 50 hours.

Upon the anionic polymerization described above, an organic Lewis base may be added to the reaction liquid of the anionic polymerization reaction. The organic Lewis base can increase the proportion of 1,2-bond and 3,4-bond, that is, the vinylation degree of a conjugated diene compound polymer block (D) in the block copolymer (A). By varying the amount of the organic Lewis base added, the proportion of 1,2-bond and 3,4-bond in the block copolymer (A) can be controlled.

Examples of the organic Lewis base include, for example, an ester, such as ethyl acetate; an amine, such as triethylamine, N,N,N',N'-tetramethylethylenediamine and N-methylmorpholine; a nitrogen containing heterocyclic aromatic compound, such as pyridine; an amide, such as dimethylacetamide; an ether, such as dimethyl ether, diethyl ether, tetrahydrofuran and dioxane; a glycol ether, such as ethylene glycol dimethyl ether and diethylene glycol dimethyl ether; a sulfoxide, such as dimethyl sulfoxide; and a ketone, such as acetone and methyl ethyl ketone.

After performing the polymerization by the method described above, the block copolymer included in the reaction liquid may be coagulated by pouring the reaction liquid into a poor solvent, such as methanol, of the block copolymer. Alternatively, the solvent may be removed azeotropically by pouring the reaction liquid together with steam into hot water (steam stripping). After removing the solvent, it is preferable that the block copolymer be dried. Drying allows a non-hydrogenated block copolymer (A) to be isolated. A hydrogenation reaction may be performed under the conditions of a hydrogen pressure of 0.1 to 20 MPa, a reaction temperature of 20 to 250°C and a reaction time of 0.1 to 100 hours.

Furthermore, a hydrogenated block copolymer (A) is obtained by performing a hydrogenation reaction to the non-hydrogenated block copolymer (A). Examples of the hydrogenation reaction include, for example, a method of reacting hydrogen with the non-hydrogenated block copolymer (A) in the presence of a hydrogenation catalyst in a solution including a solvent inert to such a reaction and the hydrogenation catalyst, and the non-hydrogenated block copolymer (A). In addition, a block copolymer (A) that has not been isolated from the reaction liquid and has not been hydrogenated may also be allowed to react with hydrogen.

Examples of the hydrogenation catalyst include, for example, a heterogeneous catalyst in which Raney nickel and metals, such as Pt, Pd, Ru, Rh and Ni are carried on a carrier of carbon, alumina, diatomaceous earth, etc.; a Ziegler catalyst comprising a combination of a transition metal compound with an alkyl aluminum compound, alkyl lithium compound, etc.; and a metallocene catalyst.

[Adhesion imparting component]

In a thermoplastic elastomer constituting a pressure sensitive adhesive layer 11 shown in Fig. 1, an adhesion imparting component (B) other than a block copolymer (A) may be included, but it is preferable that the content of the adhesion imparting component (B) be smaller than 25 parts by mass relative to 100 parts by mass of the block copolymer (A). Such a content can be 24, 23, 22, 21, 20, 19, 18, 17, 16, 15, 14, 13, 12, 11, 10, 9, 8, 7, 6, 5, 4, 3, 2, 1 or 0 part by mass relative to 100 parts by mass of the block copolymer (A). The content of the adhesion imparting component (B) within such a range can improve surface smoothness of the pressure sensitive adhesive layer.

Examples of the adhesion imparting component (B) include, for example, a polar group containing polypropylene resin (B2). The polar group containing polypropylene resin (B2) may be a copolymer of structural units derived from propylene and structural units derived from a monomer having a polar group, or may be those having a polar group on a side chain of polypropylene. An example of the polar group containing polypropylene resin is a carboxylic acid modified polypropylene resin. Such a resin is polypropylene containing a carboxy group as a polar group. Other examples include a maleic acid modified polypropylene resin and a maleic anhydride modified polypropylene resin. Examples of the polar group that the polar group containing polypropylene resin (B2) has include a (meth)acryloyloxy group; a hydroxy group; an amide group; a halogen atom, such as a chlorine atom; a carboxy group; and an acid anhydride.

A method of producing the polar group containing polypropylene resin (B2) is not particularly limited, and it may be obtained by copolymerizing a copolymerizable monomer containing a polar group with propylene, or by introducing a polar group into a polypropylene resin not containing a polar group. Examples of the copolymerizable monomer containing a polar group include, for example, vinyl acetate, vinyl chloride, ethylene oxide, propylene oxide, acrylamide, an unsaturated carboxylic acid, or esters or anhydrides thereof. Examples of the unsaturated carboxylic acid, or esters or anhydrides thereof include, for example, (meth)acrylic acid, (meth)acrylate esters, maleic acid, maleic anhydride, fumaric acid, itaconic acid, itaconic anhydride, himic acid and himic anhydride. Examples of a range of the proportion of structural units containing a polar group in the entire structural units that the polar group containing polypropylene resin (B2) has include 0 to 10 mass%, 0 to 5 mass% and 0 to 1 mass%. It is not necessary for the polar group containing polypropylene resin (B2) to be included in a composition constituting the pressure sensitive adhesive layer 11 shown in Fig. 1.

[Tackifier]

When a composition constituting a pressure sensitive adhesive layer 11 shown in Fig. 1 further contains a tackifier (aD), the content of the tackifier (aD) is preferably smaller than 1 part by mass, more preferably smaller than 0.5 part by mass, and further preferably 0 part by mass relative to 100 parts by mass of a block copolymer (A). The content of the tackifier (aD) within such a range can improve surface smoothness of the pressure sensitive adhesive layer 11.

Examples of the tackifier (aD) include, for example, an aliphatic unsaturated hydrocarbon resin, an aliphatic saturated hydrocarbon resin, an alicyclic unsaturated hydrocarbon resin, an alicyclic saturated hydrocarbon resin, an aromatic hydrocarbon resin, a hydrogenated aromatic hydrocarbon resin, a rosin ester resin, a hydrogenated rosin ester resin, a terpene phenol resin, a hydrogenated terpene phenol resin, a terpene resin, a hydrogenated terpene resin, an aromatic hydrocarbon modified terpene resin, a coumarone-indene resin, a phenol resin, a xylene resin and combinations thereof. Among these, at least any of an aliphatic saturated hydrocarbon resin, an alicyclic saturated hydrocarbon resin, a hydrogenated aromatic hydrocarbon resin and a hydrogenated terpene resin is preferred. At least any of a hydrogenated aromatic hydrocarbon resin and a hydrogenated terpene resin is more preferred.

A range of the softening point of the tackifier (aD) is preferably 50 to 200°C, more preferably 65 to 180°C, and further preferably 80 to 160°C. Here, the softening point is a value measured in accordance with ASTM28-67.

The softening point of 50°C or higher helps to maintain adhesiveness to a base layer 10 of the pressure sensitive adhesive layer 11 shown in Fig. 1 and an adherend. In this case, a temperature at which a layered product 20 is used is assumed to be an ordinary temperature (5 to 35°C). The softening point of the tackifier (aD) can be appropriately selected in accordance with a temperature at which the layered product 20 is used.

By making the softening point 200°C or lower, flexibility can be ensured at a heat processing temperature upon adhesion, and therefore, adhesiveness after the heat processing can be maintained. The heat processing temperature upon adhesion can be, for example, 200°C or higher.

[Softening agent]

A composition constituting a pressure sensitive adhesive layer 11 shown in Fig. 1 may further contain a softening agent (Sf). Examples of such a softening agent (Sf) include a softening agent commonly used for rubber or plastics, and include, for example, a paraffinic, naphthenic or aromatic process oil; a phthalic acid derivative, such as dioctyl phthalate and dibutyl phthalate; and a white oil, a mineral oil, an oligomer of ethylene and an $\alpha$-olefin, a paraffin wax, a liquid paraffin, a polybutene, a low molecular weight polybutadiene and a low molecular weight polyisoprene. Among these, a process oil is preferred and a paraffinic process oil is more preferred.

Known softening agents used in combination with a polyvinyl acetal resin can also be used as the softening agent (Sf). Examples of such a softening agent include, for example, an organic acid ester plasticizer, such as a monobasic organic acid ester and a polybasic organic acid ester; and a phosphate plasticizer, such as an organic phosphate ester and an organic phosphite ester.

Examples of the organic acid ester plasticizer include an ester of an alcohol with a polybasic organic acid, such as adipic acid, sebacic acid and azelaic acid; and a glycol ester obtained by the reaction between a glycol, such as a triethylene glycol represented by triethylene glycol-di-caproate ester, triethylene glycol-di-2-ethylbutyrate ester, triethylene glycol-di-n-octylate ester, triethylene glycol-di-2-ethylhexylate ester, etc., a tetraethylene glycol and a tripropylene glycol, and a monobasic organic acid, such as butyric acid, isobutyric acid, caproic acid, 2-ethylbutyric acid, heptylic acid, n-octylic acid, 2-ethylhexylic acid, pelargonic acid (n-nonylic acid) and decylic acid.

Examples of the polybasic organic acid ester include, for example, sebacic acid dibutyl ester, azelaic acid dioctyl ester and adipic acid dibutylcarbitol ester. Examples of the organic phosphate ester include, for example, tributoxyethyl phosphate, isodecylphenyl phosphate and triisopropyl phosphate. One type of the softening agent (Sf) may be used singly, or two types or more may be used in combination.

It is preferable that the content of the softening agent (Sf) be smaller than 25 parts by mass relative to 100 parts by mass of a block copolymer (A). Such a content can be 24, 23, 22, 21, 20, 19, 18, 17, 16, 15, 14, 13, 12, 11, 10, 9, 8, 7, 6, 5, 4, 3, 2, 1 or 0 part by mass relative to 100 parts by mass of the block copolymer (A).

[Another thermoplastic polymer]

A composition constituting a pressure sensitive adhesive layer 11 shown in Fig. 1 may contain another thermoplastic polymer other than a block copolymer (A). When another thermoplastic polymer is contained, mechanical strength of the pressure sensitive adhesive layer can be enhanced and peel strength can be improved. Examples of another thermoplastic polymer include an olefinic polymer, a styrenic polymer, a polyphenylene ether resin and a polyethylene glycol. Examples of the olefinic polymer include, for example, a block copolymer or a random copolymer of polyethylene, polypropylene, polybutene or propylene with another $\alpha$-olefin, such as ethylene and 1-butene. A methyl methacrylate-styrene block copolymer may be used as a compatibiliser. In addition, any (meth)acrylic resin described in the present description may be added.

It is preferable that the content of another thermoplastic polymer be smaller than 25 parts by mass relative to 100 parts by mass of the block copolymer (A). Such a content can be 24, 23, 22, 21, 20, 19, 18, 17, 16, 15, 14, 13, 12, 11, 10, 9, 8, 7, 6, 5, 4, 3, 2, 1 or 0 part by mass relative to 100 parts by mass of the block copolymer (A).

[Inorganic filler]

A composition constituting a pressure sensitive adhesive layer 11 shown in Fig. 1 may contain an inorganic filler. The inorganic filler can adjust heat resistance, weatherability and hardness of the pressure sensitive adhesive layer 11 appropriately. Examples of the inorganic filler include, for example, calcium carbonate, talc, magnesium hydroxide, aluminum hydroxide, mica, clay, natural silicic acid, synthetic silicic acid, titanium oxide, carbon black, barium sulfate, a glass balloon and glass fiber. Among these, one type may be used singly, or two types or more may be used in combination.

When the inorganic filler is contained, it is preferable that the content thereof be within a range that does not adversely affect flexibility of the composition constituting the pressure sensitive adhesive layer 11 shown in Fig. 1. It is preferable that the content of the inorganic filler be smaller than 25 parts by mass relative to 100 parts by mass of a block copolymer (A). Such a content can be 24, 23, 22, 21, 20, 19, 18, 17, 16, 15, 14, 13, 12, 11, 10, 9, 8, 7, 6, 5, 4, 3, 2, 1 or 0 part by mass relative to 100 parts by mass of the block copolymer (A).

[Additive]

A composition constituting a pressure sensitive adhesive layer 11 shown in Fig. 1 may contain an antioxidant, a lubricant, a light stabilizer, a processing aid, a coloring agent, such as a pigment and a dye, a flame retardant, an antistatic agent, a matting agent, a silicon oil, an antiblocking agent, an ultraviolet light absorber, a mold releasing agent, a blowing agent, an antimicrobial agent, an antifungal agent or a flavor. Examples of the antioxidant include, for example, hindered phenol, phosphorus, lactone and hydroxy antioxidants. Among these, the hindered phenol antioxidant is preferred.

It is preferable that the content of the additive described above be within a range that does not provide unintentional coloring to the composition. The content of the additive is smaller than 25 parts by mass relative to 100 parts by mass of a block copolymer (A). Such a content can be 24, 23, 22, 21, 20, 19, 18, 17, 16, 15, 14, 13, 12, 11, 10, 9, 8, 7, 6, 5, 4, 3, 2, 1 or 0 part by mass relative to 100 parts by mass of the block copolymer (A).

[Method of preparing pressure sensitive adhesive layer]

A method of preparing a composition constituting a pressure sensitive adhesive layer 11 shown in Fig. 1 is not particularly limited as long as the method allows uniform mixing of the contained components. A melt kneading method may be used. The melt kneading method can be performed using a melt kneading apparatus, such as a single screw extruder, a twin screw extruder, a kneader, a batch mixer, a roller and a Bunbury mixer. A temperature of the melt kneading can be 170 to 270°C.

[Hardness of pressure sensitive adhesive layer]

A range of hardness of a composition constituting a pressure sensitive adhesive layer 11 shown in Fig. 1 is preferably 0 to 90, more preferably 30 to 90, and further preferably 35 to 85 as measured by the JIS-A method of JIS K 6253. Such a hardness of 90 or less can provide a suitable flexibility and elastic modulus of the pressure sensitive adhesive layer 11.

[Flowability of pressure sensitive adhesive layer]

Flowability of a composition constituting a pressure sensitive adhesive layer 11 shown in Fig. 1 can be expressed with MFR (melt flow rate). MFR can be measured by a method in accordance with JIS K 7210. A range of MFR as measured at 230°C and a load of 2.16 kg (21.18 N) is preferably 1 to 50 g/10 min, more preferably 1 to 40 g/10 min, and further preferably 2 to 30 g/10 min. Such a flowability provides a good forming processability of the pressure sensitive adhesive layer 11. Therefore, it becomes easy to form the pressure sensitive adhesive layer 11, which is a pressure sensitive adhesive layer.

[Thickness of pressure sensitive adhesive layer]

A range of the thickness of a pressure sensitive adhesive layer 11 shown in Fig. 1 is preferably 10 to 500 $\mu$m, more preferably 30 to 190 $\mu$m, and further preferably 50 to 150 $\mu$m. The thickness of the pressure sensitive adhesive layer 11 of 10 $\mu$m or more can enhance adhesiveness between a layered product 20 and an adherend. The thickness of the pressure sensitive adhesive layer 11 of 500 $\mu$m or less can provide a good handling property, surface hardness and formativeness of the layered product 20. The surface hardness of the layered product 20 is a surface hardness measured on a surface 16 of a base layer 10 opposite to the pressure sensitive adhesive layer 11.

The base layer 10 shown in Fig. 1 comprises a polar resin. The polar resin comprises a (meth)acrylic resin (M). The base layer 10 comprising a (meth)acrylic resin (M) is excellent in transparency, surface hardness, surface smoothness and stretchability, and undergoes little whitening when heated.

[Composition of (meth)acrylic resin (M)]

The base layer 10 shown in Fig. 1 comprises a (meth)acrylic resin (M), and the (meth)acrylic resin (M) contains 10 mass% or more of a methacrylic resin (F). The composition ratio of the methacrylic resin (F) may be any of 20, 30, 40, 50, 60, 70, 80, 90 and 100 mass%. The content of the methacrylic resin (F) of 10 parts by mass or more can enhance surface hardness of a surface 16.

[Composition of methacrylic resin (F)]

The methacrylic resin (F) contains 80 mass% or more, preferably 90 mass% or more of structural units derived from methyl methacrylate. The composition ratio of structural units derived from methyl methacrylate may be any of 81, 82, 83, 84, 85, 86, 87, 88, 89, 90, 91, 92, 93, 94, 95, 96, 97, 98, 99 and 100 mass%. The methacrylic resin (F) contains 20 mass% or less, more preferably 10 mass% or less of other structural units.

Examples of other structural units described above include, for example, an acrylate ester, such as methyl acrylate, ethyl acrylate, n-propyl acrylate, isopropyl acrylate, n-butyl acrylate, isobutyl acrylate, sec-butyl acrylate, tert-butyl acrylate, amyl acrylate, isoamyl acrylate, n-hexyl acrylate, 2-ethylhexyl acrylate, pentadecyl acrylate, dodecyl acrylate, phenyl acrylate, benzyl acrylate, phenoxyethyl acrylate, 2-hydroxyethyl acrylate, 2-ethoxyethyl acrylate, glycidyl acrylate, allyl acrylate, cyclohexyl acrylate, norbornyl acrylate and isobornyl acrylate; a methacrylate ester other than methyl methacrylate, such as ethyl methacrylate, n-propyl methacrylate, isopropyl methacrylate, n-butyl methacrylate, isobutyl methacrylate, sec-butyl methacrylate, tert-butyl methacrylate, amyl methacrylate, isoamyl methacrylate, n-hexyl methacrylate, 2-ethylhexyl methacrylate, pentadecyl methacrylate, dodecyl methacrylate, phenyl methacrylate, benzyl methacrylate, phenoxyethyl methacrylate, 2-hydroxyethyl methacrylate, 2-ethoxyethyl methacrylate, glycidyl methacrylate, allyl methacrylate, cyclohexyl methacrylate, norbornyl methacrylate and isobornyl methacrylate; an unsaturated carboxylic acid, such as acrylic acid, methacrylic acid, maleic anhydride, maleic acid and itaconic acid; an olefin, such as ethylene, propylene, 1-butene, isobutene and 1-octene; a conjugated diene, such as butadiene, isoprene and myrcene; an aromatic vinyl compound, such as styrene, $\alpha$-methylstyrene, p-methylstyrene and m-methylstyrene; and acrylamide, methacrylamide, acrylonitrile, methacrylonitrile, vinyl acetate, vinyl pyridine, vinyl ketone, vinyl chloride, vinylidene chloride and vinylidene fluoride.

The tacticity of the methacrylic resin (F) is not particularly restricted. The tacticity may be, for example, isotactic, heterotactic, syndiotactic, etc.

A range of the weight average molecular weight Mw(F) of the methacrylic resin (F) is preferably 30,000 to 180,000, more preferably 40,000 to 150,000, and further preferably 50,000 to 130,000. Mw(F) of 30,000 or more improves impact resistance or toughness of a base layer 10 shown in Fig. 1. Mw(F) of 18,000 or less can sufficiently ensure flowability of the methacrylic resin (F), thereby enhancing forming processability of a (meth)acrylic resin (M).

[Method of producing methacrylic resin (F)]

A method of producing a methacrylic resin (F) is not particularly limited, and a methyl methacrylate monomer may be copolymerized with a monomer other than methyl methacrylate.

The methacrylic resin (F) may be a commercial product. Examples of such a commercial product include, for example, "PARAPET H1000B" (MFR: 22 g/10 min (230°C, 37.3 N)), "PARAPET GF" (MFR: 15 g/10 min (230°C, 37.3 N)), "PARAPET EH" (MFR: 1.3 g/10 min (230°C, 37.3 N)), "PARAPET HRL" (MFR: 2.0 g/10 mm (230°C, 37.3 N)), "PARAPET HRS" (MFR: 2.4 g/10 min (230°C, 37.3 N)) and "PARAPET G" (MFR: 8.0 g/10 min (230°C, 37.3 N)) (all of these are product names, manufactured by Kuraray Co., Ltd.).

From a viewpoint of impact resistance, toughness, stretchability and forming processability, it is preferable that a (meth)acrylic resin (M) further contain 1 to 90 mass% of an elastic body component (R). The composition ratio of the elastic body component (R) may be any of 1, 10, 20, 30, 40, 50, 60, 70, 80 and 90 mass%.

In 100 parts by mass of the (meth)acrylic resin (M), it is preferable that the elastic body component (R) be 45 to 10 parts by mass relative to 55 to 90 parts by mass of the methacrylic resin (F). Moreover, it is more preferable that the elastic body component (R) be 30 to 10 parts by mass relative to 70 to 90 parts by mass of the methacrylic resin (F).

[Structure of elastic body component (R)]

Examples of an elastic body component (R) include a butadiene rubber, a chloroprene rubber, a block copolymer and a multilayer structural body. These may be used singly or in combination. Among these, a block copolymer (G) comprising a (meth)acrylic resin or a multilayer structural body (E) is excellent in transparency, impact resistance and dispersibility, and thus preferred.

In one aspect, the elastic body component (R) contains the block copolymer (G). The block copolymer (G) has at least any one of a methacrylate ester polymer block (g1) and an acrylate ester polymer block (g2).

In one aspect, the elastic body component (R) contains 10 to 80 mass% of the methacrylate ester polymer block (g1). The composition ratio of the methacrylate ester polymer block (g1) may be any of 10, 20, 30, 40, 50, 60, 70 and 80 mass%.

[Methacrylate ester polymer block (g1)]

A methacrylate ester polymer block (g1) has structural units derived from a methacrylate ester as dominant structural units. The proportion of structural units derived from a methacrylate ester in the methacrylate ester polymer block (g1) is preferably 80 mass% or more, more preferably 90 mass% or more, further preferably 95 mass% or more, and particularly preferably 98 mass% or more. Such a proportion can enhance surface hardness and heat resistance of a base layer 10.

Examples of the methacrylate ester include, for example, methyl methacrylate, ethyl methacrylate, n-propyl methacrylate, isopropyl methacrylate, n-butyl methacrylate, isobutyl methacrylate, sec-butyl methacrylate, tert-butyl methacrylate, amyl methacrylate, isoamyl methacrylate, n-hexyl methacrylate, cyclohexyl methacrylate, 2-ethylhexyl methacrylate, pentadecyl methacrylate, dodecyl methacrylate, isobornyl methacrylate, phenyl methacrylate, benzyl methacrylate, phenoxyethyl methacrylate, 2-hydroxyethyl methacrylate, 2-methoxyethyl methacrylate, glycidyl methacrylate and allyl methacrylate. One type of these may be polymerized singly, or two types or more may be polymerized in combination. Among the above, an alkyl methacrylate ester, such as methyl methacrylate, ethyl methacrylate, isopropyl methacrylate, n-butyl methacrylate, tert-butyl methacrylate, cyclohexyl methacrylate and isobornyl methacrylate, can enhance transparency and heat resistance of the base layer 10. Among these, methyl methacrylate is preferred.

The methacrylate ester polymer block (g1) may include structural units derived from a monomer other than the methacrylate ester. The proportion thereof is preferably 20 mass% or less, more preferably 10 mass% or less, further preferably 5 mass% or less, and particularly preferably 2 mass% or less. Such a proportion can enhance surface hardness and heat resistance of the base layer 10.

Examples of the monomer other than the methacrylate ester include, for example, an acrylate ester, an unsaturated carboxylic acid, an aromatic vinyl compound, an olefin, a conjugated diene, acrylonitrile, methacrylonitrile, acrylamide, methacrylamide, vinyl acetate, vinyl pyridine, vinyl ketone, vinyl chloride, vinylidene chloride and vinylidene fluoride. One type of these may be used singly, or two types or more may be used in combination.

A range of the weight average molecular weight of the methacrylate ester polymer block (g1) is preferably 5,000 to 150,000, more preferably 8,000 to 120,000, and further preferably 12,000 to 100,000. The weight average molecular weight of the methacrylate ester polymer block (g1) of 5,000 or more can increase the elastic modulus of the base layer 10. Accordingly, when the base layer 10 is stretch formed at a high temperature, wrinkles hardly occur. The weight average molecular weight of 150,000 or less can enhance three dimensional covering formability of a layered product 20. In addition, the base layer 10 hardly breaks upon stretch forming.

A block copolymer (G) may have multiple types of methacrylate ester polymer blocks (g1). In this case, the composition ratio or molecular weight of structural units constituting each methacrylate ester polymer block (g1) may be the same as or different from each other.

A range of the sum total Mw(g1-total) of the weight average molecular weight of the methacrylate ester polymer block (g1) in one molecule of the block copolymer (G) is preferably 12,000 to 150,000, more preferably 15,000 to 120,000, and further preferably 20,000 to 100,000. Note that when the block copolymer (G) has only one methacrylate ester polymer block (g1) in one molecule, the weight average molecular weight of that methacrylate ester polymer block (g1) is equal to Mw(g1-total). Moreover, when the block copolymer (G) has multiple methacrylate ester polymer blocks (g1) in one molecule, the total of the weight average molecular weight of each methacrylate ester polymer block (g1) is Mw(g1-total).

Alternatively, multiple block copolymers (G) with different weight average molecular weights of the methacrylate ester polymer block (g1) may be mixed and used. In this case, Mw(g1-total) is determined by multiplying the mixing ratio of each block copolymer (G) by the weight average molecular weight of the methacrylate ester polymer block (g1) each has, and adding up the resultant values.

A range of Mw(F)/Mw(g1-total) is preferably 0.3 to 4.0, more preferably 1.0 to 3.5, and further preferably 1.5 to 3.0. Mw(F)/Mw(g1-total) of 0.3 or more improves impact resistance of the base layer 10 and smoothness of its surfaces (an interface 12 and a surface 16). Such a ratio of 4.0 or less can improve surface smoothness of the base layer 10, and temperature dependency of haze can be reduced.

A range of the proportion of the methacrylate ester polymer block (g1) in the block copolymer (G) is preferably 10 to 70 mass% and more preferably 25 to 60 mass%. Such a proportion can enhance transparency, flexibility, forming processability and surface smoothness of the base layer 10. When the block copolymer (G) includes multiple types of methacrylate ester polymer blocks (g1), such a proportion is calculated based on the total mass of all methacrylate ester polymer blocks (g1).

[Acrylate ester polymer block (g2)]

In one aspect, a block copolymer (G) further contains 20 to 90 mass% of an acrylate ester polymer block (g2). The acrylate ester polymer block (g2) has structural units derived from an acrylate ester as dominant structural units. The proportion of structural units derived from an acrylate ester in the acrylate ester polymer block (g2) is, from a viewpoint of three dimensional coating formability and stretchability, preferably 45 mass% or more, more preferably 50 mass% or more, further preferably 60 mass% or more, and particularly preferably 90 mass%.

Examples of the acrylate ester include, for example, methyl acrylate, ethyl acrylate, n-propyl acrylate, isopropyl acrylate, n-butyl acrylate, isobutyl acrylate, sec-butyl acrylate, tert-butyl acrylate, amyl acrylate, isoamyl acrylate, n-hexyl acrylate, cyclohexyl acrylate, 2-ethylhexyl acrylate, pentadecyl acrylate, dodecyl acrylate, isobornyl acrylate, phenyl acrylate, benzyl acrylate, phenoxyethyl acrylate, 2-hydroxyethyl acrylate, 2-methoxyethyl acrylate, glycidyl acrylate and allyl acrylate. One type of these may be polymerized singly, or two types or more may be polymerized in combination.

It is preferable that the acrylate ester polymer block (g2) comprise an alkyl acrylate ester and a (meth)acrylate aromatic ester. Such an acrylate ester polymer block (g2) can enhance stretchability and transparency of a base layer 10 shown in Fig. 1.

Examples of the alkyl acrylate ester include, for example, methyl acrylate, ethyl acrylate, isopropyl acrylate, n-butyl acrylate, 2-ethylhexyl acrylate and dodecyl acrylate. Among these, n-butyl acrylate and 2-ethylhexyl acrylate are preferred.

The (meth)acrylate aromatic ester means an acrylate aromatic ester or a methacrylate aromatic ester. Such a (meth)acrylate aromatic ester is prepared by forming an ester bond between a compound including an aromatic ring and (meth)acrylic acid. Examples of such a (meth)acrylate aromatic ester include, for example, phenyl acrylate, benzyl acrylate, phenoxyethyl acrylate, styryl acrylate, phenyl methacrylate, benzyl methacrylate, phenoxyethyl methacrylate and styryl methacrylate. Among these, phenyl methacrylate, benzyl methacrylate, phenoxyethyl methacrylate and benzyl acrylate can enhance transparency of the base layer 10 shown in Fig. 1.

It is preferable that the acrylate ester polymer block (g2) include 50 to 90 mass% of structural units derived from the alkyl acrylate ester and 10 to 50 mass% of structural units derived from the (meth)acrylate aromatic ester. It is more preferable that the acrylate ester polymer block (g2) include 60 to 80 mass% of structural units derived from the alkyl acrylate ester and 20 to 40 mass% of structural units derived from the (meth)acrylate aromatic ester. Such an acrylate ester polymer block (g2) can enhance transparency of the base layer 10 shown in Fig. 1.

The acrylate ester polymer block (g2) may include structural units derived from a monomer other than the acrylate ester. The content thereof is preferably 55 mass% or less, more preferably 50 mass% or less, further preferably 40 mass% or less, and particularly preferably 10 mass% or less in the acrylate ester polymer block (g2).

Examples of the monomer other than the acrylate ester include, for example, a methacrylate ester, an unsaturated carboxylic acid, an aromatic vinyl compound, an olefin, a conjugated diene, acrylonitrile, methacrylonitrile, acrylamide, methacrylamide, vinyl acetate, vinyl pyridine, vinyl ketone, vinyl chloride, vinylidene chloride and vinylidene fluoride. One type of these may be used singly, or two types or more may be used in combination.

A range of the weight average molecular weight of the acrylate ester polymer block (g2) is preferably 5,000 to 120,000, more preferably 15,000 to 110,000, and further preferably 30,000 to 100,000. Such a range can enhance three dimensional covering formability of a layered product 20 shown in Fig. 1 and stretchability of the base layer 10.

The block copolymer (G) may have multiple types of acrylate ester polymer blocks (g2). In such a case, the composition ratio or molecular weight of each structural unit constituting acrylate ester polymer blocks (g2) may be the same as or different from each other.

A range of the sum total Mw(g2-total) of the weight average molecular weight of the acrylate ester polymer block (g2) in one molecule of the block copolymer (G) is preferably 30,000 to 140,000, more preferably 40,000 to 110,000, and further preferably 50,000 to 100,000. Mw(g2-total) of 30,000 or more improves impact resistance of the base layer 10 shown in Fig. 1. Mw(g2-total) of 140,000 or less improves smoothness of a surface 16.

The block copolymer (G) may have only one acrylate ester polymer block (g2) in one molecule. In such a case, the weight average molecular weight of that acrylate ester polymer block (g2) is equal to Mw(g2-total). Moreover, the block copolymer (G) may have multiple acrylate ester polymer blocks (g2) in one molecule. In such a case, the total of the weight average molecular weight of each acrylate ester polymer block (g2) is Mw(g2-total).

Multiple types of block copolymers (G) with different weight average molecular weights of the methacrylate ester polymer block (g2) may be mixed and used. In such a case, Mw(g2-total) is determined by multiplying the mixing ratio of each block copolymer (G) by the weight average molecular weight of the methacrylate ester polymer block (g2) each has, and adding up the resultant values.

Note that the weight average molecular weight of the methacrylate ester polymer block (g1) and the weight average molecular weight of the acrylate ester polymer block (g2) are values calculated based on measurement during the course of production of the block copolymer (G). These weight average molecular weights are calculated from weight average molecular weights of intermediate products measured by sampling during and after polymerization, and the final product, that is, the block copolymer (G). Each weight average molecular weight is a value in terms of standard polystyrene measured by GPC.

A range of the proportion of the acrylate ester polymer block (g2) in the block copolymer (G) is preferably 30 to 90 mass% and more preferably 40 to 75 mass%. Such a range can improve transparency, flexibility, forming processability and surface smoothness of the base layer 10. When the block copolymer (G) includes multiple types of acrylate ester polymer blocks (g2), such a proportion can be calculated based on the total mass of all acrylate ester polymer blocks (g2).

[Binding form of block copolymer (G)]

The binding form between a methacrylate ester polymer block (g1) and an acrylate ester polymer block (g2) in a block copolymer (G) is not particularly limited. For example, examples of the structure include a structure in which the methacrylate ester polymer block (g1) and the acrylate ester polymer block (g2) are connected serially. Examples of such a structure include a structure in which one end of the acrylate ester polymer block (g2) is connected to one end of the methacrylate ester polymer block (g1) ((g1)-(g2) structure); a structure in which one end of the acrylate ester polymer block (g2) is connected to both ends of the methacrylate ester polymer block (g1) ((g2)-(g1)-(g2) structure); and a structure in which one end of the methacrylate ester polymer block (g1) is connected to both ends of the acrylate ester polymer block (b2) ((g1)-(g2)-(g1) structure).

In addition, examples also include a star block copolymer having a radial structure in which multiple block copolymers with (g1)-(g2) structure are connected at one end ([(g1)-(g2)-]nX structure and [(g2)-(g1)-]nX structure); a radial structure in which multiple block copolymers with (g1)-(g2)-(g1) structure are connected at one end ([(g1)-(g2)-(g1)-]nX structure); a radial structure in which multiple block copolymers with (g2)-(g1)-(g2) structure are connected at one end ([(g2)-(g1)-(g2)-nX structure); or the like, as well as a block copolymer with a branched structure. Here, X denotes a coupling agent residue.

Among the above, a diblock copolymer, a triblock copolymer and a star block copolymer can enhance surface smoothness and impact resistance of a base layer 10. Among these, a diblock copolymer with (g1)-(g2) structure, a triblock copolymer with (g1)-(g2)-(g1) structure, a star block copolymer with [(g1)-(g2)-]nX structure and a star block copolymer with [(g1)-(g2)-(g1)-]nX are more preferred. Among these, the triblock copolymer with (g1)-(g2)-(g1) structure is further preferred.

[Another polymer block (g3)]

A block copolymer (G) may have another polymer block (g3) other than a methacrylate ester polymer block (g1) and an acrylate ester polymer block (g2). The principal structural units constituting another polymer block (g3) are structural units derived from a monomer other than a methacrylate ester and an acrylate ester. Examples of such a monomer include, for example, an olefin, such as ethylene, propylene, 1-butene, isobutene and 1-octene; a conjugated diene, such as butadiene, isoprene and myrcene; an aromatic vinyl compound, such as styrene, $\alpha$-methylstyrene, p-methylstyrene and m-methylstyrene; and vinyl acetate, vinyl pyridine, acrylonitrile, methacrylonitrile, vinyl ketone, vinyl chloride, vinylidene chloride, vinylidene fluoride, acrylamide, methacrylamide, $\varepsilon$-caprolactone and valerolactone.

The binding form among the methacrylate ester polymer block (g1), the acrylate ester polymer block (g2) and the polymer block (g3) is not particularly limited. Examples include a block copolymer with (g1)-(g2)-(g1)-(g3) structure or (g3)-(g1)-(g2)-(g1)-(g3) structure. The block copolymer (G) may have multiple polymer blocks (g3). In such a case, the composition ratio or molecular weight of structural units constituting each polymer block (g3) may be the same as or different from each other.

[Characteristics of block copolymer (G)]

A block copolymer (G) may have a functional group, such as a hydroxy group, a carboxy group, an acid anhydride and an amino group, in the molecular chain or at the end of the molecular chain.

A range of the weight average molecular weight Mw(G) of the block copolymer (G) is preferably 60,000 to 400,000 and more preferably 100,000 to 200,000. The weight average molecular weight of the block copolymer (G) of 60,000 or more can retain a sufficient melt tension during melt extrusion molding of a base layer 10. In addition, the base layer 10 can be formed as a good flat molded product. Moreover, mechanical properties, such as breaking strength, of the base layer 10 obtained as a flat molded product can be improved. By making such a weight average molecular weight 400,000 or less, viscosity of the molten resin can be lowered. As such, the base layer 10 as a good flat molded product is obtained in melt extrusion molding. Examples of a good flat molded product include those in which fine, crimp-like irregularities or defects due to unmelted material of a high molecular weight product do not occur on the surface.

A range of the molecular weight distribution (weight average molecular weight/number average molecular weight) of the block copolymer (G) is preferably 1.0 to 2.0 and more preferably 1.0 to 1.6. The molecular weight distribution in such a range can reduce the content of unmelted material in the base layer 10, causing occurrence of defects. In addition, impact resistance of the base layer can also be enhanced. Note that the weight average molecular weight and the number average molecular weight are a molecular weight in terms of standard polystyrene measured by GPC.

[Method of producing block copolymer (G)]

A method of producing a block copolymer (G) is not particularly limited, and it can be produced by a method in accordance with known approaches. For example, a method may be used in which monomers constituting each polymer block are subjected to living polymerization. Examples of an approach for living polymerization include, for example, a method in which an organic alkali metal compound is used as a polymerization initiator and anionic polymerization is performed in the presence of a mineral salt, such as an alkali metal or alkali earth metal salt.

Another example is a method in which an organic alkali metal compound is used as a polymerization initiator and anionic polymerization is performed in the presence of an organic aluminum compound. In such a method, the block copolymer (G) is obtained at a high purity. In addition, it is easy to control the molecular weight and the composition ratio. Such a method is also economical.

Another example is a method in which an organic rare earth metal complex is used as a polymerization initiator to perform polymerization. Other examples include a method in which an $\alpha$-halogenated ester compound is used as an initiator and radical polymerization is performed in the presence of a copper compound.

Another example is a method in which monomers constituting each block are polymerized using a polyvalent radical polymerization initiator or a polyvalent radical chain transfer agent. In such a method, a mixture containing the block copolymer (G) is produced.

[Multilayer structural body (E)]

In one aspect, an elastic body component (R) forms a multilayer structural body (E) having an outer layer (e1) and an inner layer (e2). The inner layer (e2) and the outer layer (e1) are arranged in this order from the central layer toward the outermost layer. The multilayer structural body (E) may further have a crosslinkable resin layer (e3) on the inside of the inner layer (e2) or on the outside of the outer layer (e1).

[Composition of inner layer (e2)]

An inner layer (e2) is a layer composed of a crosslinked elastic body obtained by copolymerizing a monomer mixture having an alkyl acrylate ester and a crosslinkable monomer. The inner layer (e2) contains 70 to 99.8 mass% of structural units derived from the alkyl acrylate ester. The inner layer (e2) further contains 0.2 to 30 mass% of structural units derived from the crosslinkable monomer.

For the alkyl acrylate ester, an alkyl acrylate ester with 2 to 8 carbon atoms in the alkyl group is preferably used. Examples of such an ester include, for example, butyl acrylate and 2-ethylhexyl acrylate. A range of the proportion of the alkyl acrylate ester in the entire monomer mixture used for forming the crosslinked elastic body is preferably 70 to 99.8 mass% and more preferably 80 to 90 mass%. Such a range can enhance impact resistance of a base layer 10 shown in Fig. 1.

The crosslinkable monomer has at least two polymerizable carbon-carbon double bonds in one molecule. Examples of the crosslinkable monomer include, for example, an unsaturated carboxylate diester of a glycol, such as ethylene glycol dimethacrylate and butanediol dimethacrylate, an alkenyl ester of an unsaturated carboxylic acid, such as allyl acrylate, allyl methacrylate and allyl cinnamate, a polyalkenyl ester of a polybasic acid, such as diallyl phthalate, diallyl maleate, triallyl cyanurate and triallyl isocyanurate, an unsaturated carboxylate ester of a polyhydric alcohol, such as trimethylolpropane triacrylate, and divinyl benzene. Among these, the alkenyl ester of an unsaturated carboxylic acid or the polyalkenyl ester of a polybasic acid is preferred.

A range of the amount of the crosslinkable monomer in the entire monomer mixture is preferably 0.2 to 30 mass% and more preferably 0.2 to 10 mass%. Such a range can improve impact resistance, heat resistance and surface hardness of the base layer 10 shown in Fig. 1.

Furthermore, another monofunctional monomer may be mixed into the monomer mixture. Examples of another monofunctional monomer include, for example, an alkyl methacrylate, such as methyl methacrylate, ethyl methacrylate, n-propyl methacrylate, isopropyl methacrylate, n-butyl methacrylate, isobutyl methacrylate, pentyl methacrylate, hexyl methacrylate, octyl methacrylate, 2-ethylhexyl methacrylate, cyclohexyl methacrylate, dodecyl methacrylate, myristyl methacrylate, palmityl methacrylate, stearyl methacrylate and behenyl methacrylate; a methacrylate ester, including an ester of methacrylic acid and a phenol, such as phenyl methacrylate, and an ester of methacrylic acid and an aromatic alcohol, such as benzyl methacrylate; an aromatic vinyl monomer, such as styrene, $\alpha$-methylstyrene, 1-vinylnaphthalene, 3-methylstyrene, 4-propylstyrene, 4-cyclohexylstyrene, 4-dodecylstyrene, 2-ethyl-4-benzylstyrene, 4-(phenylbutyl)styrene and a halogenated styrene; a vinyl cyanide monomer, such as acrylonitrile and methacrylonitrile; and a conjugated diene monomer, such as butadiene and isoprene.

A range of the amount of another monofunctional monomer in the entire monomer mixture is preferably 24.5 mass% or less and more preferably 20 mass% or less. Such a range can improve impact resistance of the base layer 10 shown in Fig. 1.

[Composition of outer layer (e1)]

An outer layer (e1) is composed of a rigid thermoplastic resin. The rigid thermoplastic resin contains 80 mass% or more, preferably 90 mass% or more of structural units derived from methyl methacrylate. The rigid thermoplastic resin is made by polymerizing such a monomer mixture containing methyl methacrylate.

The rigid thermoplastic resin includes 20 mass% or less, preferably 10 mass% or less of another monofunctional monomer. Examples of another monofunctional monomer include an alkyl acrylate ester, such as methyl acrylate, butyl acrylate and 2-ethylhexyl acrylate; acrylic acid; and methacrylic acid.

[Production of multilayer structural body (E)]

It is preferable that the proportion of an inner layer (e2) in a multilayer structural body (E) be 40 to 80 mass% based on the mass of the multilayer structural body (E). Similarly, it is preferable that the proportion of an outer layer (e1) be 20 to 60 mass%. Such a combination of the outer layer (e1) and the inner layer (e2) improves impact resistance, heat resistance, surface hardness and a handling property of a base layer 10 shown in Fig. 1. In addition, it become easy to perform melt kneading of an elastic body component (R) and a methacrylic resin (F).

A method for producing the multilayer structural body (E) is not particularly limited. By producing the multilayer structural body (E) via emulsion polymerization, the layered structure of the multilayer structural body (E) can be controlled.

[Polar resin suitably used other than (meth)acrylic resin (M)]

For a polar resin constituting a base layer 10, a resin other than a (meth)acrylic resin (M) may be used. Examples include a polystyrene resin, a polyvinyl chloride resin, a polyethylene terephthalate (PET) resin, a polybutylene terephthalate resin (PBT), an acrylonitrile-styrene (AS) resin, an acrylonitrile-butadiene-styrene (ABS) resin, a polyvinyl chloride resin, a polyvinylidene chloride resin, a polyvinyl alcohol resin, an ethylene-vinyl alcohol resin, a polyacetal resin, a polyvinylidene fluoride resin, a polyurethane resin, a modified polyphenylene ether resin, a polyphenylene sulfide resin and a silicone modified resin. Among these, the PET resin, the PBT resin, the AS resin and the ABS resin are preferred from a viewpoint of adhesiveness, transparency, weatherability, surface glossiness and excoriation resistance.

[Additive to polar resin]

Not only a (meth)acrylic resin (M), but an additive may be added to a polar resin constituting a base layer 10. Examples of the additive include, for example, an antioxidant, a light stabilizer, a thermal stabilizer, a lubricant, a processing aid, an antistatic agent, an antioxidant, a coloring agent, an impact resistance aid, a filler, an infrared light absorber, an ultraviolet light absorber, a blowing agent, a fluorescent brightening agent, a dispersing agent and a solvent.

[Antioxidant added to polar resin]

An antioxidant has effects of preventing oxidative degradation of a resin by itself in the presence of oxygen. Examples of the antioxidant include, for example, a phosphorus antioxidant, a hindered phenol antioxidant and a thioether antioxidant. One type of these antioxidants may be used singly, or two types or more may be used in combination. Among these, the phosphorus antioxidant or the hindered phenol antioxidant is preferred. These antioxidants are preferred because decline in optical characteristics due to unintentional coloring hardly occurs in a base layer 10 shown in Fig. 1. Furthermore, combined use of the phosphorus antioxidant and the hindered phenol antioxidant is more preferred. In such a case, their mixing proportion is not particularly restricted. A range of the mass ratio of the phosphorus antioxidant/the hindered phenol antioxidant is preferably 1/5 to 2/1 and more preferably 1/2 to 1/1.

Examples of the phosphorus antioxidant include, for example, 2,2-methylenebis(4,6-di-tert-butylphenyl)octyl phosphite (manufactured by Asahi Denka Co., Ltd., product name: ADK STAB HP-10) and tris(2,4-di-tert-butylphenyl) phosphite (manufactured by Ciba Specialty Chemicals, Inc., product name: IRUGAFOS 168).

Examples of the hindered phenol antioxidant include pentaerythrityl-tetrakis[3-(3,5-di-tert-butyl-4-hydroxyphenyl)propionate] (manufactured by Ciba Specialty Chemicals, Inc., product name: IRGANOX 1010), octadecyl-3-(3,5-di-tert-butyl-4-hydroxyphenyl)propionate (manufactured by Ciba Specialty Chemicals, Inc., product name: IRGANOX 1076) and 3,9-bis(2,6-di-tert-butyl-4-methylphenoxy)-2,4,8,10-tetraoxa-3,9-diphophaspyro[5.5]undecane (manufactured by ADEKA CORPORATION, product name: ADK STAB PEP-36).

[Another agent added to polar resin]

A thermal degradation inhibitor can reduce thermal degradation of a resin by capturing polymer radicals. Polymer radicals are produced, for example, when a polar resin reaches a high temperature in a condition with substantially no oxygen. Examples of the thermal degradation inhibitor include, for example, 2-tert-butyl-6-(3'-tert-butyl-5'-methyl-hydroxybenzyl)-4-methylphenyl acrylate (manufactured by Sumitomo Chemical Co., Ltd., product name: SUMILIZER GM) and 2,4-di-tert-amyl-6-(3',5'-di-tert-amyl-2'-hydroxy-$\alpha$-methylbenzyl)phenyl acrylate (manufactured by Sumitomo Chemical Co., Ltd., product name: SUMILIZER GS).

An ultraviolet light absorber is a compound that has an ability of absorbing ultraviolet rays. Examples of the ultraviolet light absorber include, for example, a benzophenone, a benzotriazole, a triazine, a benzoate, a salicylate, a cyanoacrylate, an anilide oxalate, a malonate ester and a formamidine. One type of these may be used singly, or two types or more may be used in combination. Among these, the benzotriazole and the anilide are preferred because they can suppress bleed out of the ultraviolet light absorber in the polar resin.

The benzotriazole is highly effective in suppressing degradation of the resin caused by ultraviolet rays. Examples of the benzotriazole include 2,2'-methylenebis[4-(1,1,3,3-tetramethylbutyl)-6-(2H-benzotriazol-yl)phenol] (manufactured by Asahi Denka Co., Ltd., product name: ADK STAB LA-31), 2-(2H-benzotriazol-2-yl)-4-(1,1,3,3-tetramethylbutyl)phenol (manufactured by Ciba Specialty Chemicals, Inc., product name: TINUVIN 329) and 2-(2H-benzotriazol-2-yl)-4,6-bis(1-methyl-1-phenylethyl)phenol (manufactured by Ciba Specialty Chemicals, Inc., product name: TINUVIN 234). Examples of the anilide include 2-ethyl-2'-ethoxy-oxalanilide (manufactured by Clariant Japan K. K., product name: Sanduvor VSU).

A light stabilizer has a function of capturing radicals mainly generated by oxidation caused by light. Examples of the light stabilizer include, for example, a hindered amine, such as a compound having a 2,2,6,6-tetraalkylpiperidine framework.

A processing aid is a compound that contributes to improvement of the thickness accuracy and formation of a thin film upon molding of the polar resin. The processing aid may be a polymer particle with a particle diameter of 0.05 to 0.5 $\mu$m. Such a polymer particle may be produced by an emulsion polymerization method.

Such a polymer particle may be a single layer particle. The single layer particle is a particle comprising a polymer with a single composition ratio and a single intrinsic viscosity. Alternatively, such a polymer particle may be a multilayer particle. The multilayer particle is a particle comprising two types or more of polymers with different composition ratios and intrinsic viscosities. Among these, a multilayer particle with a two layer structure is preferred. Such a multilayer particle has a polymer layer with a low intrinsic viscosity as an inner layer. It also has a polymer layer with an intrinsic viscosity of at least 5 dl/g as an outer layer.

It is preferable that a range of intrinsic viscosity of the processing aid be 3 to 6 dl/g. The intrinsic viscosity of 3 dl/g or more is highly effective in improving formability of the polar resin. The intrinsic viscosity of 6 dl/g or less keeps melt flowability of the polar resin suitable.

[Another polymer mixed with polar resin]

A polar resin can be mixed with another polymer and used. Examples of such another polymer include, for example, a polyolefin resin, such as polyethylene, polypropylene (PP), polybutene-1, poly-4-methylpentene-1 and polynorbornene; an ethylene ionomer; a styrene resin, such as polystyrene, styrene-maleic anhydride copolymer, high impact polystyrene, acrylonitrile-styrene (AS) resin, acrylonitrile-butadiene-styrene (ABS) resin, acrylonitrile-ethylene-styrene (AES) resin, acrylonitrile-acrylate ester-styrene (AAS) resin, acrylonitrile-chlorinated polyethylene-styrene (ACS) resin and methyl methacrylate-butadiene-styrene (MBS) resin; a methyl methacrylate-styrene resin; a polyester resin, such as polyethylene terephthalate (PET) resin and polybutylene terephthalate resin; a polyamide, such as nylon 6, nylon 66 and polyamide elastomer; polycarbonate, polyvinyl chloride, polyvinylidene chloride, polyvinyl alcohol, ethylene-vinyl alcohol copolymer, polyacetal, polyvinylidene fluoride, polyurethane, modified polyphenylene ether, polyphenylene sulfide and silicone modified resins; an acrylic rubber and silicone rubber; a styrene thermoplastic elastomer, such as styrene-ethylene/propylene-styrene copolymer (SEPS), styrene-ethylene/butadiene-styrene copolymer (SEBS) and styrene-isoprene-styrene copolymer (SIS); and an olefin rubber, such as isoprene rubber (IR), ethylene propylene rubber (EPR) and ethylene propylene diene rubber (EPDM).

[Preparation of polar resin]

A method of preparing a masterbatch for a polar resin constituting a base layer is not particularly limited. For example, by employing a method of melt kneading and mixing, dispersibility of each component constituting the polar resin can be enhanced. For the mixing operation, known mixing or kneading apparatuses can be used. Examples include a kneader-rudder, an extruder, a mixing roll or a Bunbury mixer. By using a twin screw extruder, kneadability and compatibility can be improved. A temperature during mixing and kneading may be adjusted appropriately depending on the melting temperature of the polar resin used and the like. For example, the temperature is within a range of 110°C to 300°C. When a twin screw extruder is used for melt kneading, unintentional coloring to the polar resin can be suppressed by using a vent and performing the melt kneading under reduced pressure or in a nitrogen atmosphere. Any one of the reduced pressure and nitrogen atmosphere may be employed. The polar resin may be obtained in any forms, such as pellet or powder. The polar resin in a form of pellet or powder is suitable for the use as a molding material.

The base layer can be produced by known methods, such as a T-die method, an inflation method, a melt casting method and a calendar method. From a viewpoint of obtaining a base layer with a good surface smoothness and a low haze, a method including a step, in which the melt kneaded product is extruded from a T-die in a molten state and then molded by bringing both sides thereof into contact with mirror roll surfaces or mirror belt surfaces, is preferred, and a method including a step of molding by pinching both sides under pressure between mirror roll surfaces or mirror belts is more preferred. In addition, it is preferable that all of the rolls or belts used here be made of metal. From a viewpoint of surface smoothness, the pinching pressure by the mirror rolls or mirror belts is, as a linear pressure, preferably 10 N/mm or more, and more preferably 30 N/mm or more.

When the base layer is produced by a T-die method, for example, an extruder type melt extrusion apparatus having a single or twin extrusion screw can be used. From a viewpoint of forming processability and product quality, the molding temperature for producing the base layer is preferably in a range of 200 to 300°C and more preferably in a range of 220 to 270°C. In addition, when a melt extrusion apparatus is used, from a viewpoint of suppressing coloring, it is preferable that a vent be used and the melt extrusion be performed under reduced pressure or in a nitrogen atmosphere.

In the step of molding by pinching both sides of the polar resin in a molten state under pressure between mirror roll surfaces or mirror belt surfaces, it is preferable that the surface temperature of at least one of the mirror rolls or mirror belts pinching the polar resin be 60°C or more, and the surface temperature of both sides be 130°C or less. When the surface temperature of both of the mirror rolls or mirror belts pinching the polar resin is less than 60°C, surface smoothness and haze of the base layer tends to decline, whereas when the surface temperature of at least one side exceeds 130°C, surface smoothness of the resulting base layer tends to decline or haze tends to increase.

The base layer may be colored. A coloring method is not particularly limited, and examples include a method of having a coloring agent contained in the polar resin or a method of immersing the base layer in a liquid in which a coloring agent is dispersed.

The roughness of the base layer is preferably 1.5 nm or less and more preferably in a range of 0.1 to 1.0 nm. Within this range, a layered product of the present disclosure has an excellent surface smoothness, surface gloss and printing clarity. In addition, when used for optical applications, the layered product has excellent, optical characteristics, such as light transmittance, and shaping accuracy upon surface shaping.

The haze of the base layer is preferably 0.3% or less and more preferably 0.2% or less. This is preferable because such a haze provides an excellent printing clarity when used for applications that require design, and increases utilization efficiency of the light source when used for optical applications, such as an LCD protection film or a light guide film.

The thickness of the base layer is preferably in a range of 10 to 500 $\mu$m, more preferably in a range of 40 to 300 $\mu$m, and further preferably in a range of 50 to 200 $\mu$m. When the thickness of the base layer is less than 10 $\mu$m, the layered product is less strong and more likely to warp upon stretch forming and adhesion, whereas the thickness above 500 $\mu$m weakens properties, such as a laminating property, a handling property, a cutting property and a punching processability, thereby making it difficult to use the layered product as a film, and it also tends to be more likely to break upon vacuum molding.

A stretching process may be performed on the base layer. By the stretching process, a base layer with an enhanced mechanical strength that is difficult to be cracked can be obtained. A stretching method is not particularly limited, and examples include a simultaneous biaxial stretching method, a sequential biaxial stretching method, a tubular stretching method and a rolling method. From a viewpoint of obtaining a base layer with a high strength that can be stretched uniformly, a temperature during the stretching is preferably, relative to the glass transition temperature (hereinafter, referred to as "Tg") of the polar resin, (Tg + 10) to (Tg + 40)°C. When the stretching temperature is less than (Tg + 10)°C, the molded product is likely to break during the stretching, whereas when the stretching temperature exceeds (Tg + 40)°C, effects of the stretching process are not sufficiently developed and the strength of the base layer is difficult to be enhanced. The stretching speed is normally 100 to 5,000% per minute. When the stretching speed is small, the strength is difficult to be increased and productivity also declines. On the other hand, when the stretching speed is big, the base layer may break or uniform stretching may become difficult. It is preferable that heat setting be performed after stretching. By the heat setting, base layer with little heat shrinkage can be obtained. The thickness of the base layer obtained by stretching is preferably in a range of 10 to 500 $\mu$m. Note that the glass transition temperature (Tg) of the polar resin is determined by differential scanning calorimetry (DSC).

[Production of layered product 20]

In order to form a membrane structure 17 shown in Fig. 1, a pressure sensitive adhesive layer 11 is closely adhered and laminated onto a base layer 10 upon production of a layered product 20.

A method of producing the layered product 20 is not particularly limited, and for example, it can be produced by press molding or coextrusion molding. In a heat press method, which is one type of the press molding, the base layer 10 and the pressure sensitive adhesive layer 11 are bonded by thermocompression. Thermocompression is to laminate the pressure sensitive adhesive layer 11 onto the base layer 10 with heat and pressure. In coextrusion molding, a resin to become the base layer 10 and a thermoplastic elastomer to become the pressure sensitive adhesive layer 11 are coextruded with a T-die.

Alternatively, a solution including a thermoplastic elastomer to become the pressure sensitive adhesive layer 11 may be applied to the base layer 10. A film to become the pressure sensitive adhesive layer 11 may also be laminated onto the base layer 10. It is preferable that such a film comprise a pressure sensitive adhesive. Such a film is obtained by a similar method as the base layer 10. Such a pressure sensitive adhesive may be a molten, film-type pressure sensitive adhesive. Alternatively, the base layer 10 is formed by laminating a film comprising a resin onto the pressure sensitive adhesive layer 11. Such a film may be molten, film-type base layer materials.

In the pressure sensitive adhesive layer 11 described above, while each molecule of a block copolymer (A) is retaining bonds between an aromatic vinyl compound polymer block (S) and a conjugated diene compound polymer block (D), aromatic vinyl compound polymer blocks (S) and conjugated diene compound polymer blocks (D) aggregate on their own between molecules of the block copolymer (A), leading to at least partial phase separation between a phase comprising the aromatic vinyl compound polymer block (S) and a phase comprising the conjugated diene compound polymer block (D).

[Forming condition: complex of material selection and heat]

In order to form a membrane structure 17 shown in Fig. 1, it is preferable to enhance compatibility between a resin constituting a base layer 10 and an aromatic vinyl compound polymer block (S), and it is further preferable to apply a sufficient heat for at least partial phase separation of a block copolymer (A).

[Material selection and compatibility]

By selecting a combination of a resin constituting a base layer 10 and an aromatic vinyl compound polymer block (S), compatibility (adherence, wettability) between them can be enhanced. The compatibility of each layer can be estimated using known methods. For example, compatibility between at least two molecules A and B that constitute the respective layers can be estimated by Hansen's solubility parameters, and using the solubility parameters, a dispersion force term per molar volume ($\delta$d), a dipole-dipole force term ($\delta$p) and a hydrogen bonding force term ($\delta$h), the compatibility $\delta$ can be determined by the following formula:

$$\delta = \{(\delta dA - \delta dB)2 + (\delta pA - \delta pB)2 + (\delta hA - \delta hB)2\}1/2$$

wherein, the smaller such $\delta$ is, the higher the compatibility is, and the bigger $\delta$ is, the lower the compatibility is.

In the present disclosure, because the base layer 10 comprises a polar resin, the $\delta$ between the aromatic vinyl compound polymer block (S) and the polar resin is smaller than the $\delta$ between a conjugated diene compound polymer block (D) and the polar resin, and after phase separation of an aromatic phase 14 and a diene phase 15, the aromatic phase 14 can form a membrane structure 17 in the vicinity of an interface 12. On the other hand, in a case where a layer corresponding to the base layer 10 comprises a nonpolar resin, the $\delta$ between the aromatic vinyl compound polymer block (S) and the nonpolar resin is bigger than the $\delta$ between the conjugated diene compound polymer block (D) and the nonpolar resin, and such a membrane structure 17 is not formed.

The base layer 10 according to the present disclosure may be formed of a material having polarity, and it may be formed of, for example, a metal, a metal oxide or a ceramic.

[Forming condition of membrane structure: heat]

In order to form a membrane structure 17 shown in Fig. 1, it is preferable that a sufficient heat be applied to a layered product 20. Indications of the heat quantity applied to the layered product 20 include a heating temperature and a heating time for the layered product 20.

Upon selection of the heating temperature, the viscoelasticity of any of a block copolymer (A) and a thermoplastic elastomer containing the block copolymer (A) is considered. At first, by performing measurement of such viscoelasticity, the loss tangent (tan $\delta$) of any of the block copolymer (A) and the thermoplastic elastomer is obtained. The loss tangent (tan $\delta$) is obtained as a function of temperature. Here, focus is placed on the peak value (tan $\delta_{max}$) of the loss tangent (tan $\delta$) at the side of the highest temperature. Furthermore, focus is also placed on the kick off starting temperature of such a peak value. The heating temperature mentioned above is preferably higher than such a kick off starting temperature.

When the thermoplastic elastomer containing the block copolymer (A) does not contain an adhesion imparting component (B), the heating temperature is preferably 80°C or higher, more preferably 100°C or higher, and further preferably 120°C or higher. The heating temperature may be 160°C or higher.

When the thermoplastic elastomer containing the block copolymer (A) does contain an adhesion imparting component (B), the heating temperature is preferably 130°C or higher, more preferably 150°C or higher, further preferably 160°C or higher, and further more preferably 180°C or higher. The heating temperature may be 200°C or higher.

It is desirable to make the heating time sufficient for the formation of microphase separated structure composed of an aromatic phase 14 shown in Fig. 1. Moreover, it is also desirable to make the heating time sufficient for declining of the viscosity of any of the block copolymer (A) and the thermoplastic elastomer containing the block copolymer (A).

When the thermoplastic elastomer containing the block copolymer (A) does not contain an adhesion imparting component (B), the heating time is preferably 1 second or longer, more preferably 10 seconds or longer, and further preferably 100 seconds or longer.

When the thermoplastic elastomer containing the block copolymer (A) does contain an adhesion imparting component (B), the heating time is preferably 1 minute or longer, more preferably 2 minutes or longer, and further preferably 3 minutes or longer.

[Pressure sensitive adhesiveness at interface]

Pressure sensitive adhesiveness between a base layer 10 and a pressure sensitive adhesive layer 11 shown in Fig. 1 can be measured by, for example, peel strength, adhesive strength under shear, adhesive strength under tension, bending adhesive strength, etc. Strength and weakness of this pressure sensitive adhesiveness is also affected by the material strength (cohesive strength) of the pressure sensitive adhesive layer 11, as described below. When strengthening the pressure sensitive adhesiveness, a high compatibility is required between the base layer 10 and the pressure sensitive adhesive layer 11, which is obtained by the formation of the membrane structure 17 described above.

[Peel strength at interface]

Pressure sensitive adhesiveness between a base layer 10 and a pressure sensitive adhesive layer 11 shown in Fig. 1 is expressed by, for example, peel strength.

Such peel strength is preferably greater than 5 N/25 mm, more preferably greater than 15 N/25 mm, and further preferably greater than 30 N/25 mm. Here, the peel strength is a value measured in accordance with JIS K 6854-2. An actual measuring method will be mentioned later in Examples.

In addition to the compatibility described above, the peel strength is also affected by the material strength (cohesive strength) of the pressure sensitive adhesive layer 11.

The material strength can be measured by known methods, and for example, can be suitably evaluated by the tensile testing according to JIS K 7113, 7161, 7162 or 7127.

Tensile stress upon the tensile testing is, under a condition where the tensile strain is 1000% or less upon uniaxial deformation, preferably 20 MPa or less because the pressure sensitive adhesive layer is sufficiently flexible for accurate measurement of the peeling test, and more preferably 15 MPa or less because a high peel strength is shown. Moreover, such tensile stress is, under a condition where the tensile strain is 1000% or less upon uniaxial deformation, preferably 0.1 MPa or more because the pressure sensitive adhesive layer is sufficiently hard for accurate measurement of the peeling test, and more preferably 1 MPa or more because a high peel strength is shown.

[Characteristics of layered product 20]

A pressure sensitive adhesive layer 11 shown in Fig. 1 has an adhesive surface 13 on an opposite side of a base layer 10 or an interface 12. The adhesive surface 13 can be closely adhered to an adherend (not shown) and a layered product 20 can be suitably used as a, so-called, film provided with a pressure sensitive adhesive layer.

The layered product 20 shown in Fig. 1 forms a membrane structure 17 at the interface 12. The membrane structure 17 is believed to enhance compatibility between the pressure sensitive adhesive layer 11 and the base layer 10 at the interface 12, and a high adhesive force can be ensured between the base layer and the adherend when the layered product 20 is pasted to the adherend. Therefore, the base layer 10 is hard to be peeled off from the adherend.

The pressure sensitive adhesive layer 11 containing a block copolymer (A) has an excellent adhesiveness not only to a polar resin, but also to a nonpolar resin. Therefore, for example, when the surface of the adherend to be adhered comprises a polypropylene resin, the peel strength of the base layer 10 is 20 N/25 mm or more. Accordingly, before pasting to the adherend, it is preferable that a peelable protection film be stuck to the adhesive surface 13. Such peel strength is more preferably 30 N/25 mm or more and further preferably 60 N/25 mm or more. Here, the peel strength is a value measured in accordance with JIS K 6854-2.

Elongation at break of the layered product 20 shown in Fig. 1 is preferably 160% or more, more preferably 200% or more, and further preferably 250% or more. Here, the elongation at break is defined to be a value measured at a temperature 5°C below the glass transition temperature (Tg) of the polar resin that forms the base layer. Since the elongation at break is 160% or more, the layered product 20 has a high formability upon three dimensional covering, and breaks or wrinkles are also hard to occur upon the three dimensional covering.

A range of the thickness of the layered product 20 is preferably 20 to 1,000 μm, more preferably 50 to 500 μm, and further preferably 100 to 250 μm. When the thickness is 20 μm or more, the layered product 20 can be produced easily, and it has an excellent impact resistance and warps are hard to occur upon heating. In addition, when the layered product 20 is colored, the color or surface irregularities of the adherend can be hidden. When the thickness of the layered product 20 is 1,000 μm or less, it is easy to mold and shape the layered product to follow the surface of the adherend having a three dimensional shape.

A range of the ratio of the thickness of the base layer 10 to the thickness of the pressure sensitive adhesive layer 11 shown in Fig. 1 is preferably 0.2 to 5, more preferably 0.5 to 4, and further preferably 0.8 to 3. By making the value of such a ratio 0.2 or more, surface hardness of a surface 16 can be enhanced. By making the value of such a ratio 5 or less, break of the layered product 20 can be suppressed. In addition, by making the value of such a ratio 4 or less, stretchability of the layered product 20 can be enhanced. Moreover, by making the value of such a ratio 3 or less, stretchability of the layered product 20 can be further enhanced.

The surface 16 is preferably HB or harder than that, and more preferably H or harder than that in pencil hardness. A pencil hardness harder than HB can impart excoriation resistance to the adherend. In addition, weatherability may be imparted to the adherend by the layered product 20.

[Use of layered product 20]

By pasting a layered product 20 shown in Fig. 1 to an adherend, a decorated, coated article can be produced. Examples of materials of a surface to be adhered in the adherend include thermoplastic resins, thermosetting resins, woody or non-woody fiber substrates, carbon fibers, ceramics, metals and glass.

Examples of thermoplastic resins include, for example, a polycarbonate resin, a polyester resin, a polyamide resin, a polyethylene resin, a polypropylene resin, a polystyrene resin, a polyvinyl chloride resin, a (meth)acrylic resin and an ABS resin. Examples of thermosetting resins include, for example, an epoxy resin, a phenol resin and a melamine resin. Examples of non-woody fiber substrates include, for example, a kenaf substrate.

The material for the surface to be adhered is preferably a thermoplastic resin, and particularly preferably a polypropylene resin. Upon production of a coated article, an adhesive surface 13 shown in Fig. 1 is closely adhered to the surface to be adhered that the adherend has. The coated article that has a surface comprising the layered product 20 is excellent in surface smoothness, surface hardness, surface gloss, etc.

A method of producing the coated article is not particularly restricted, and examples include an insert molding method, a vacuum molding method, a pressure forming method, a compression molding method and a three dimension overlay method (TOM molding). By employing the vacuum molding method or the TOM molding, the layered product 20 can be shaped accurately to various adherends and adhered to them. Among these, the TOM molding is more preferable in terms of not requiring preforming.

For a vacuum molding apparatus for TOM molding the layered product 20, for example, a vacuum molding apparatus described in Japanese Unexamined Patent Application Publication No. 2002-067137 or a coating apparatus described in Japanese Unexamined Patent Application Publication No, 2005-262502 can be suitably used. The vacuum molding apparatus and the coating apparatus are equipped with a chamber box.

In order to produce a molded product by TOM molding, the layered product 20 and the adherend are enclosed in the chamber box; the pressure inside the chamber box is reduced; the space in the chamber box is divided into two by the layered product 20, wherein the adherend is placed in a space at the side of the adhesive surface 13; the pressure in a space at the side without the adherend in the chamber box is raised higher than that of the space at the side with the adherend; and the layered product 20 is pressure bonded to the adherend using such pressure difference, thereby covering the adherend with the layered product 20. Note that the space in the chamber box may be divided into two by the layered product 20 when the layered product 20 and the adherend are enclosed in the chamber box.

When the pressure in the chamber box is reduced, a range of the pressure in the chamber box is preferably 0.1 to 20 kPa, and more preferably 0.1 to 10 kPa. A pressure of 20 kPa or lower can accurately shape the layered product 20 when the adherend is covered with the layered product 20. In addition, a pressure of 0.1 kPa or higher can decrease time required for shaping and coating. Thus, productivity can be enhanced.

In the TOM molding, it is preferable that the layered product 20 be heated to be softened in advance. A range of the temperature of the layered product 20 upon heating is preferably 110 to 160°C, and more preferably 110 to 140°C. With the temperature of the layered product 20 of 110°C or higher, the layered product 20 is sufficiently softened. Thus, the layered product 20 can be shaped well. In addition, the adhesive force between the layered product 20 and the adherend is enhanced. With the temperature of the layered product 20 of 160°C or lower, over-softening and deterioration of the layered product 20 can be prevented. Thus, the product quality of the molded product can be enhanced. Note that heating of the layered product 20 can be simultaneously performed when the pressure in the chamber box is reduced.

When a pressure difference is provided in the chamber box, a range of the pressure in the space at the side without the adherend is preferably 50 to 500 kPa, and further preferably 100 to 400 kPa. By making such pressure 50 kPa or higher, the layered product 20 can be shaped accurately. In addition, by making such pressure 500 kPa or lower, time required for making the pressure in the chamber box the same as the pressure outside of the apparatus, that is, atmospheric pressure (about 100 kPa) becomes shorter when the covered article is take out from the chamber box. Thus, productivity can be enhanced.

As a method of providing a pressure difference in the chamber box, examples include a method in which the space at the side without the adherend is opened and the pressure in that space is returned to atmospheric pressure. In addition, examples include a method in which pressurized air is fed into the space at the side without the adherend. By feeding pressurized air, the layered product 20 can be adhered to the adherend more closely. Therefore, the surface shape of the adherend can be further accurately transferred to the layered product 20.

[Suitable applications]

A layered product 20 shown in Fig. 1 has a good three dimensional covering formability, surface hardness, stretchability, forming processability, adhesiveness and concealability as a decorative material. Therefore, the layered product 20 can be suitably used for articles or structures that require design. Examples of such articles or structures include, for example, a sign component, such as an advertising tower, a standing signboard, a side signboard, a transom signboard and a rooftop signboard; a display component, such as a show case, a partition and a shop display; a lighting component, such as a fluorescent light cover, a mood lighting cover, a lampshade, a lighted ceiling, a lighted wall and a chandelier; an interior component, such as furniture, a pendant and a mirror; a construction component, such as a door, a dome, safety window glass, a room partition, a staircase panel, a balcony panel and a roof for leisure structures; a transport-related component, such as an automobile interior and exterior finish component and an automobile exterior finish component including a bumper; an electronic device component, such as an audiovisual nameplate, a stereo cover, a vending machine, a portable phone and a personal computer; an incubator, a ruler, a communication board, a greenhouse, a large water tank, an aquarium, a bathroom component, a clock panel, a bathtub, a sanitary material, a desk mat, a game equipment, a toy, a musical instrument and wallpaper; a marking film and various household appliances.

[Decorating method]

When a layered product 20 is pasted to an adherend, a surface 16 of a base layer 10 shown in Fig. 1 on an opposite side of a pressure sensitive adhesive layer 11 is exposed to decorate the adherend.

Patterns or colors, such as wood grain, pictures, characters and figures, may be printed onto at least any of the base layer 10 and the pressure sensitive adhesive layer 11 shown in Fig. 1. Glossy surfaces, such as metallic and piano black tones, may be provided to them. Patterns may be of chromatic colors or achromatic colors. Examples of a method of printing include known printing methods, such as gravure printing, offset printing, screening printing, transfer printing and inkjet printing. In the printing, a resin, such as a polyvinyl resin, a polyester resin, an acrylic resin, a polyvinyl acetal resin and a cellulose resin, may be used as a binder. In addition, a pigment or a dye may be used as a coloring agent. A resin composition containing them may be used as well.

A metal or a metal oxide may be deposited onto the surface 16 shown in Fig. 1. Examples of a deposition method include a vacuum deposition method, such as vapor deposition and sputtering, electroplating, and electroless plating. For the metal or metal oxide, there is no particular restriction as long as it is suitable for the deposition method described above. Examples include, for example, gold, silver, copper, aluminum, zinc, nickel, chromium, indium and oxides thereof. In addition, one type of these metals or metal oxides may be used singly, or a mixture of two types or more may be used.

**Examples**

The present disclosure is not limited to the following Examples. Evaluation of each physical property that layered products of Examples and Comparative Examples have was conducted according to the following methods.

[Analysis by TOF-SIMS]

Confirmation of a membrane structure 17 by TOF-SIMS (time of flight secondary ion mass spectrometry) was performed as follows. In the TOF-SIMS measurement, at first, a pellet of a thermoplastic elastomer used as a raw material of a pressure sensitive adhesive layer 11 was cut and its cross section was analyzed by TOF-SIMS. Based on the results of the analysis, a ratio $R_c$ of the signal strength of $C_7H_7^+$ ions to the signal strength of $C_2H_5^+$ ions was determined.

Apparatus: TOF.SIMS 5 (manufactured by IONTOF)
Measured degree of vacuum before sample introduction; $4 \times 10^{-7}$ Pa ($4 \times 10^{-9}$ mbar) or less
Primary ion species: $Bi^{3+}$ (30 keV)
Primary ion accelerating voltage: 25 kV
Pulse width: 4.3 ns
Bunching: present (high mass resolution measurement)
Charge neutralization: present
Post-acceleration: 10 kV
Raster size: 300 $\mu$m square
Mass range (m/z): 0 to 1,500
Number of scans: 32 scans
Number of pixels in one side: 256 pixels
Polarity of secondary ions: positive, observation of positive ions $C_3H_7^+$ and $C_7H_7^+$
Analysis: depth profile analysis by GCIB-TOF-SIMS

Next, the pressure sensitive adhesive layer 11 was peeled off from a base layer 10 with the boundary of an interface 12 shown in Fig. 1. In such a pressure sensitive adhesive layer 11, analysis by TOF-SIMS was performed according to the same method as described above, to a surface that has been in contact with the base layer 10 to form the interface 12. Based on the results of the analysis, a ratio $R_j$ of the signal strength of $C_7H_7^+$ ions to the signal strength of $C_2H_5^+$ ions was determined. A ratio of $R_j$ to $R_c$, $R_j/R_c$ was calculated.

[Observation with TEM]

A membrane structure 17 and a region 19 shown in Fig. 1 were observed by staining an aromatic vinyl compound polymer block (S) in a slice having a cross section of a layered product 20, as follows. Fabrication of slices were conducted by cutting the layered product 20 with a cryo ultramicrotome (manufactured by Leica Microsystems, ULTRACUT S/FC-S) at -100°C. In this case, cutting was conducted parallely to a surface to become a cross section of the layered product 20 and perpendicularly to an interface 12. By cutting, slices with a thickness of less than 100 nm were obtained. These slices were fixed to a stand of a copper mesh, and the image was captured. Conditions for the imaging were as follows.

Staining: 0.5 mass% solution of $RuO_4$ (JEOL Ltd.)
Imaging apparatus: transmission electron microscope (manufactured by Hitachi High-Technologies Corporation, HT7700)
Imaging mode: high contrast mode
Accelerating voltage: 100 kV
Magnification: $2 \times 10^3$ to $100$ to $10^3$ times

Evaluation criteria based on the observed image are as follows:

A: Membrane structure 17 formed by aromatic phase 14 shown in Fig. 1 was observed in a pressure sensitive adhesive layer.
B: Membrane structure 17 formed by aromatic phase 14 shown in Fig. 1 was hard to be observed in a pressure sensitive adhesive layer.
C: Membrane structure 17 formed by aromatic phase 14 shown in Fig. 1 was not observed in a pressure sensitive adhesive layer.

[Elongation at break]

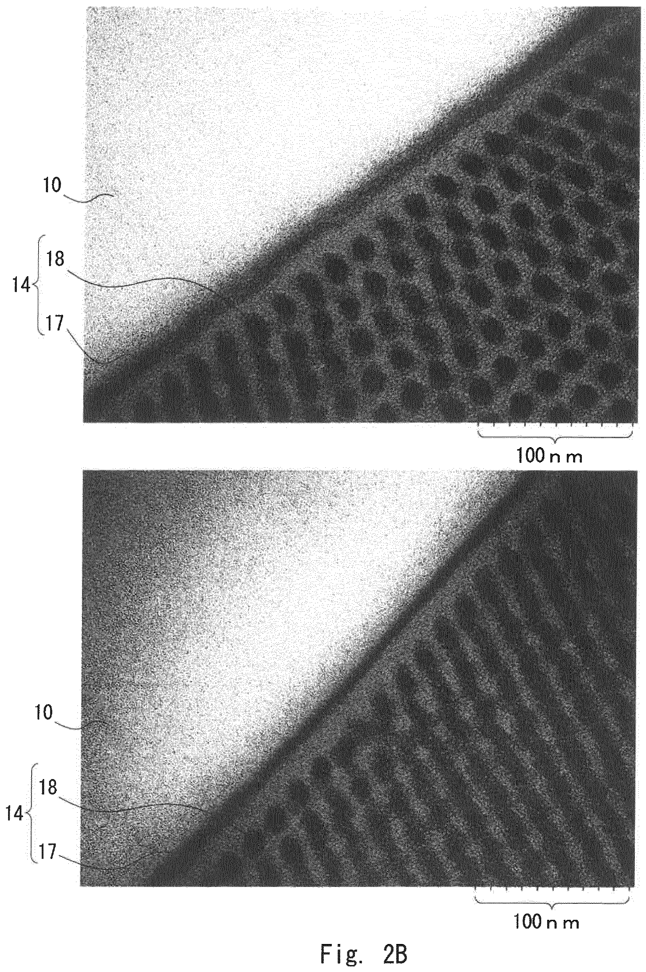

The value of elongation at break was measured on a layered product 20 shown in Figs. 1 and 2 by a method in accordance with JIS K 7161. The measurement was performed using a tensile testing machine (manufactured by Instron, 5566 Universal Testing Machine). The measurement temperature was 5°C below the glass transition temperature (Tg) of a polar resin.

[Peel strength]

At first, a layered product 20 shown in Fig. 1 was laminated onto an adherend by the method mentioned later. Next, the layered product 20 exposed on the surface of a coated article is heated to 130°C. Subsequently, a surface 16 was fixed to a stainless steel (SUS) plate. The fixation was performed by sticking a very adhesive tape (manufactured by NITTO DENKO CORPORATION, product name: HYPERJOINT H9004) to the surface 16 and the stainless steel material. Measurement was performed in accordance with JIS K 6854-2 using a table-top type precision universal tester (manufactured by Shimadzu Corporation, AGS-X). The peeling angle was 180°, the tension speed was 300 mm/minute, and the environmental temperature was 23°C. The peel strength between a base layer 10 and the adherend was measure. Based on the peel strength, the adhesive strength between the base layer 10 and the adherend was measure was evaluated in accordance with the following criteria.

A: Peel strength of greater than 25 N/25 mm
B: Peel strength of greaten than 5 N/25 mm and not more than 25 N/25 mm
C: Peel strength of not more than 5 N/25 mm

Materials for producing layered products of Examples and Comparative Examples were made according to the following methods.

<Synthetic Example 1> Methacrylic resin (F)

To a monomer mixture comprising 95 parts by mass of methyl methacrylate and 5 parts by mass of methyl acrylate, 0.1 part by mass of a polymerization initiator and 0.28 part by mass of a chain transfer agent were added and dissolved to obtain a raw material solution. The polymerization initiator was 2,2'-azobis(2-methylpropionitrile) (hydrogen abstraction ability: 1%, 1 hour half life temperature: 83°C). The chain transfer agent was n-octyl mercaptan.
In addition, 100 parts by mass of ion exchanged water, 0.03 part by mass of sodium sulfate and 0.45 part by mass of a suspension dispersing agent were mixed to obtain a mixed solution in another vessel. Into a pressure resistant polymerization tank, 420 parts by mass of the mixed solution and 210 parts by mass of the raw material solution were loaded. Polymerization reaction was initiated by raising the temperature to 70°C while stirring the mixture in a nitrogen atmosphere. After 3 hours from the start of the polymerization reaction, the temperature was raised to 90°C. Stirring was continued for further 1 hour. From the above, a dispersion liquid in which copolymers in a bead form are dispersed was obtained. The resulting dispersion liquid was washed with an appropriate amount of ion exchanged water. The copolymers in a bead form were taken out with a bucket type centrifuge. The copolymers taken out were dried for 12 hours with a hot air drier at 80°C. From the above, a methacrylic resin (F) in a bead form was obtained with a weight average molecular weight Mw of 30,000 and a glass transition temperature (Tg) of 128° C.

<Synthetic Example 2> Block copolymer (G)

Into a reactor, 39.4 kg of a toluene solution, sec-butyllithium (1.17mol) and 35.0 kg of methyl methacrylate were added in this order at room temperature. The inside of the reactor was deaerated and nitrogen purged in advance. For the toluene solution, a part of a mixture comprising 735 kg of dry toluene, 0.4 kg of hexamethyltriethylenetetramine and isobutylbis(2,6-di-tert-butyl-4-methylphenoxy)aluminum (20 mol) was used. In the reactor, these compounds were allowed to react for 1 hour at room temperature. By sampling a part of the reaction liquid, the weight average molecular weight of the polymer included in the reaction liquid was measured. The measurement was 40,000. Such a value corresponds to the weight average molecular weight Mw of a first methacrylate ester polymer block (g1) comprising methyl methacrylate.

The reaction liquid was then cooled to -25°C. A mixed solution of 24.5 kg of n-butyl acrylate and 10.5 kg of benzyl acrylate was added dropwise over 0.5 hour. When a part of the reaction liquid was sampled, the weight average molecular weight of the polymer included in the reaction liquid was found to be 80,000, and thus the weight average molecular weight Mw of an acrylate ester polymer block (g2) comprising a copolymer of n-butyl acrylate and benzyl acrylate was determined to be 40,000.

Then, 35.0 kg of methyl methacrylate was added to the reaction liquid. Furthermore, the reaction liquid was returned to room temperature, and then stirred for 8 hours. From this, a second methacrylate ester polymer block (g1) comprising methyl methacrylate was synthesized. After this, 4 kg of methanol was added to the reaction liquid to stop polymerization. Then, a large amount of methanol was further poured into the reaction liquid and filtered. The residue was dried for 12 hours in an environment of 80°C and 1 torr (about 133Pa). From the above, a block copolymer (G) was isolated.

Based on the fact that the weight average molecular weight Mw of the resulting block copolymer (G) was 120,000, the weight average molecular weight Mw of the second methacrylate ester polymer block (g1) was determined to be 40,000. Since the weight average molecular weight Mw of both first and second methyl methacrylate polymer blocks is 40,000, the weight average molecular weight Mw(total) of the comprehensive methyl methacrylate polymer block is 80,000.

<Synthetic Example 3> Multilayer structural body (E)

A reactor equipped with a stirrer, a thermometer, a nitrogen gas introduction pipe and a monomer introduction pipe, and a reflux condenser was used. To such a reactor, 1,050 parts by mass of ion exchanged water, 0.5 part by mass of sodium dioctylsulfosuccinate and 0.7 part by mass of sodium carbonate were loaded. After thoroughly purging the interior of the reactor with nitrogen gas, the internal temperature of the reactor was set at 80°C. To the aqueous solution in the reactor, 0.25 part by mass of potassium persulfate was added, and the resulting mixture was stirred for 5 minutes.

A monomer mixture comprising methyl methacrylate, methyl acrylate and allyl methacrylate at a mass ratio of 94:5.8:0.2 was prepared in advance. To the aqueous solution in the reactor, 245 parts by mass of such a monomer mixture was continuously added dropwise over 50 minutes. After completion of the dropping, the polymerization reaction was continued for further 30 minutes.

Then, to the aqueous solution in the reactor, 0.32 part by mass of potassium peroxodisulphate was added, and the resulting mixture was stirred for 5 minutes. A monomer mixture comprising 80.6 mass% of butyl acrylate, 17.4 mass% of styrene and 2 mass% of allyl methacrylate was prepared in advance, and 315 parts by mass of such a monomer mixture was continuously added dropwise over 60 minutes to the aqueous solution in the reactor. After completion of the dropping, the polymerization reaction was continued for further 30 minutes.

Then, to the aqueous solution in the reactor, 0.14 part by mass of potassium peroxodisulphate was added. Furthermore, the aqueous solution in the reactor was stirred for 5 minutes. A monomer mixture comprising methyl methacrylate and methyl acrylate at a mass ratio of 94:6 was prepared in advance, and 140 parts by mass of such a monomer mixture was continuously fed dropwise over 30 minutes to the aqueous solution in the reactor. After completion of the dropping, the polymerization reaction was continued for further 60 minutes. From the above, a multilayer structural body (E) was obtained.

For synthetic examples of a block copolymer (A), the following block copolymers (A-1) to (A-4) were synthesized.

<Synthetic Example 4> Block copolymer (A-1)

By purging a pressure resistant vessel with nitrogen in advance, the pressure resistant vessel was dried. To such a pressure resistant vessel, 50.0 kg of cyclohexane as a solvent, 94.1 g of a solution of sec-butyllithium in cyclohexane (10.5 mass%) (sec-butyllithium equivalent of 9.9 g) as an anionic polymerization initiator, and 300g of tetrahydrofuran as a Lewis base were loaded. The temperature of such a solution was raised to 50°C. To such a solution, 1.25 kg of styrene (1) was added and then polymerization reaction was conducted for 1 hour. Subsequently, to such a solution, 10.00 kg of isoprene was added and then polymerization reaction was conducted for 2 hours. Furthermore, to such a solution, 1.25 kg of styrene (2) was added and then polymerization reaction was conducted for 1 hour. From the above, a reaction liquid including a styrene-isoprene-styrene triblock copolymer was obtained.

To this reaction liquid, 5 mass% of palladium carbon was added as a hydrogenation catalyst per 100 mass% of the block copolymer. Note that the amount of palladium carried is 5 mass% per 100 mass% of palladium carbon. The reaction was conducted for 10 hours in an environment with a hydrogen pressure of 2 MPa and 150°C. The reaction liquid was allowed to cool and release pressure. After this, palladium carbon was removed from the reaction liquid by filtration, the filtrate was concentrated, and the concentrate was vacuum dried to obtain a block copolymer (A-1), which is a hydrogenated product of the styrene-isoprene-styrene triblock copolymer.

<Synthetic Example 5> Block copolymer (A-2)

By purging a pressure resistant vessel with nitrogen in advance, the pressure resistant vessel was dried. To such a pressure resistant vessel, 50.0 kg of cyclohexane as a solvent and 137.1 g of a solution of sec-butyllithium in cyclohexane (10.5 mass%) (sec-butyllithium equivalent of 14.4g) as an anionic polymerization initiator were loaded. The temperature of such a solution was raised to 50°C. To such a solution, 2.59 kg of styrene (1) was added and then polymerization reaction was conducted for 1 hour. Subsequently, to such a solution, 9.91 kg of isoprene was added and then polymerization reaction was conducted for 2 hours. From the above, a reaction liquid including a styrene-isoprene diblock copolymer (A-2a) was obtained.

To such a reaction liquid, 11.7g of triethoxysilane (TEOS) was added. After this, coupling reaction was conducted for 5 hours. From the above, a reaction liquid including a block copolymer (A-2b), which is a star block copolymer, in addition to the block copolymer (A-2a) was obtained. In the star block copolymer (A-2b), block copolymers (A-2a) are connected to each other by TEOS.

Such a reaction liquid was allowed to cool and release pressure. After this, by vacuum drying the reaction liquid, a block copolymer (A-2), which is a mixture of the block copolymers (A-2a) and (A-2b), was obtained. When confirmed by GPC measurement, the composition ratio of the block copolymers (A-2a) and (A-2b) in the block copolymer (A-2), (A-2a)/(A-2b) was 30/70.

<Synthetic Example 6> Block copolymer (A-3)

By purging a pressure resistant vessel with nitrogen in advance, the pressure resistant vessel was dried. To such a pressure resistant vessel, 50.0 kg of cyclohexane as a solvent, 145.6 g of a solution of sec-butyllithium in cyclohexane (10.5 mass%) (sec-butyllithium equivalent of 15.3 g) as an anionic polymerization initiator, and 76 g of tetrahydrofuran as a Lewis base were loaded. The temperature of such a solution was raised to 50°C. To such a solution, 1.87 kg of styrene (1) was added and then polymerization reaction was conducted for 1 hour. Subsequently, to such a solution, 8.75 kg of butadiene was added and then polymerization reaction was conducted for 2 hours. Furthermore, 1.87 kg of styrene (2) was added and then polymerization reaction was conducted for 1 hour. From the above, a reaction liquid including a styrene-butadiene-styrene triblock copolymer was obtained.

To this reaction liquid, 5 mass% of palladium carbon was added as a hydrogenation catalyst per 100 mass% of the block copolymer. Note that the amount of palladium carried is 5 mass% per 100 mass% of palladium carbon. The reaction was conducted for 10 hours in an environment with a hydrogen pressure of 2 MPa and 150°C. The reaction liquid was allowed to cool and release pressure. After this, palladium carbon was removed from the reaction liquid by filtration, the filtrate was concentrated, and the concentrate was vacuum dried to obtain a block copolymer (A-3), which is a hydrogenated product of the styrene-butadiene-styrene triblock copolymer.

The composition and physical properties of the block copolymers (A-1) to (A-3) from Synthetic Examples 4 to 6 are shown in Table 1.

[Table 1]

| Synthetic Examples of block copolymers (A) | | | Synthetic Example 4 (A-1) | Synthetic Example 5 (A-2) | | Synthetic Example 6 (A-3) |
|---|---|---|---|---|---|---|
| | | | | A-2a | A-2b | |
| Amount used [kg] | | Cyclohexane | 50.0 | 50.0 | | 50.0 |
| | | sec-Butyllithium (10.5 mass% solution in cyclohexane) | 0.0941 | 0.1371 | | 0.1456 |
| | | Styrene (1) | 1.25 | 2.59 | | 1.87 |
| | | Styrene (2) | 1.25 | - | | 1.87 |
| | | Isoprene | 10.00 | 9.91 | | - |
| | | Butadiene | - | - | | 8.75 |
| | | Tetrahydrofuran | 0.300 | - | | 0.076 |
| | | Triethoxysilane (TEOS) | - | 0.0117 | | - |
| Aromatic vinyl compound polymer block (S)/ conjugated diene compound polymer block (D) | | | 20/80 | 21/79 | | 30/70 |
| Polymer backbone | | | St-Ip-St | St-Ip | - | St-Bd-St |
| Abundance ratio of (A-2a)/(A-2b) | | | - | 30/70 | | - |
| Physical properties | | Peak top molecular weight (Mp) of styrene block | 8,100 | 11,500 | 11,500 | 7,850 |
| | | Peak top molecular weight (Mp) of block copolymer | - | 78,800 | 244,600 | |
| | | Peak top molecular weight (Mp) of hydrogenated block copolymer | 115,200 | - | - | 80,060 |
| | | Molecular weight distribution (Mw/Mn) | 1.04 | 1.04 | 1.08 | 1.13 |
| | | Hydrogenation rate (%) | 90.4 | 0 | 0 | 99.0 |
| | | Vinylation degree (mol%) | 55 | 8.8 | | 40 |

In Table 1, aromatic vinyl compound polymer block (S)/conjugated diene compound polymer block (D) represents the component ratio (mass) of these polymer blocks. The peak top molecular weight (Mp) of styrene block, block copolymer and hydrogenated block copolymer means a molecular weight at a peak of change in signal of the molecular abundance varying depending on the molecular weight. Molecular weight distribution is a ratio between the weight average molecular weight and the number average molecular weight (weight average molecular weight/number average molecular weight) of the block copolymers (A-1) to (A-3).

<Synthetic Example 7> Adhesion imparting component (B)

As an adhesion imparting component (B), a polar group containing polypropylene resin was synthesized. The synthesis followed the description in the paragraph 0075 of Japanese Patent No. 5809150. Forty-two grams of a polypropylene resin (manufactured by Prime Polymer Co., Ltd., product name: Prime Polypro F327), 160 mg of maleic anhydride and 42 mg of 2,5-dimethyl-2,5-di(tert-butylperoxy)hexane were melt kneaded. The melt kneading was performed using a batch mixer at a temperature of 180°C and a screw speed of 40 rpm.

The maleic anhydride concentration in the resulting kneaded product was 0.3%. Note that the maleic anhydride concentration is a value obtained by titrating the resulting kneaded product using a potassium hydroxide/methanol solution.

<Production Example 1> Production of pellet of methacrylic resin (F)

Using a twin screw extruder, 100 parts by mass of the methacrylic resin (F) in a bead form obtained by Synthetic Example 1 was melt kneaded at 230°C, and extruded in strands. By cutting the extruded resin, pellets of the methacrylic resin (F) were obtained.

<Production Example 2> Production of (meth)acrylic resin (M-1)

Using a twin screw extruder, 80 parts by mass of pellets of the methacrylic resin (F) obtained by Production Example 1 and 20 parts by mass of the block copolymer (G) obtained by Synthetic Example 2 were melt kneaded together at 230°C, and extruded in strands. By cutting the extruded resin, pellets of a (meth)acrylic resin (M-1) were obtained.

<Production Example 3> Production of (meth)acrylic resin (M-2)

Using a twin screw extruder, 70 parts by mass of pellets of the methacrylic resin (F) obtained by Production Example 1 and 30 parts by mass of the multilayer layered product (E) obtained by Synthetic Example 3 were melt kneaded together at 230°C, and then extruded in strands. By cutting the extruded resin, pellets of a (meth)acrylic resin (M-2) were obtained.

Layered products described in Examples and Comparative Examples were made according to the following methods.

[Heat press method]

In a part of the following Examples and Comparative Examples, layered products were obtained by binding a base layer and a pressure sensitive layer with heat and pressure. At first, 10 g of a resin to become the pressure sensitive adhesive layer was filled in a mold with a thickness of 0.5 mm arranged between two stainless steel (SUS) plates. The size of the stainless steel (SUS) plate was 20 cm square, and the shape of the space in a frame of the mold was about 15 cm square. Such stainless steel plates and the mold were placed on a heat press machine (manufactured by SHINTO Metal Industries Corporation; AYS.10, the same used in the following Production Examples and Examples). The resin was heated at 200°C for 1 minute without applying pressure to the resin. Then, the resin was heat pressed with a force of 35 kgf for 20 seconds. After this, the stainless steel plates and the mold were immediately placed on a cool press machine at 23°C. While cooling the resin with the cool press machine, pressure was applied to the resin. By cutting the resin in the mold, a pressure sensitive adhesive layer material of 15 cm x 15 cm, with a thickness of 0.5 mm was obtained.

Next, 10 g of a resin to become the base layer was filled in a mold with a thickness of 0.2 mm arranged between two stainless steel (SUS) plates. The size of the stainless steel (SUS) plate was 20 cm square, and the shape of the space in a frame of the mold was about 15 cm square. Such stainless steel plates and the mold were placed on the heat press machine. The resin was heated at 240°C for 1 minute without applying pressure to the resin. Then, the resin was heat pressed with a force of 35 kgf for 20 seconds. After this, the stainless steel plates and the mold were immediately placed on a cool press machine at 23°C. While cooling the resin with the cool press machine, pressure was applied to the resin. By cutting the resin in the mold, a base layer material of 15 cm x 15 cm, with a thickness of 0.2 mm was obtained.

Subsequently, the base layer material and the pressure sensitive adhesive layer material were bonded by thermocompression. Without applying pressure, the pressure sensitive adhesive layer material was laminated onto the base layer material to obtain a pre-press layered product. The lamination was performed at about 23°C. Such a pre-press layered product was arranged in a mold with a thickness of 0.7 mm arranged between two stainless steel (SUS) plates. The size of the stainless steel (SUS) plate was 20 cm square, and the shape of the space in a frame of the mold was about 15 cm square. Then, the pre-press layered product was heated for 1 minute at the respective temperatures described in the paragraph of the respective Examples and Comparative Examples. After this, the resin was heat pressed with a force of 35 kgf for 20 seconds, and then the stainless steel plates and the mold were immediately placed on a cool press machine at 23°C. While cooling the resin with the cool press machine, pressure was applied to the resin. According to this, layered products were obtained.

[Coextrusion method]

In a part of Examples and Comparative Examples, a resin to become a base layer and a resin to become a pressure sensitive adhesive layer were coextruded with a T-die. At first, resin pellets to become the pressure sensitive adhesive layer obtained by Production Example and resin pellets to become the base layer obtained by Synthetic Example were charged into separate hoppers that a 25 mm Φ vent type single screw extruder (manufactured by GM ENGINEERING Co., Ltd., VGM25-28EX) has. For the T-die, a multimanifold die was used. From the multimanifold die, the two resins described above were coextruded at an extrusion temperature of 240°C. The extruded resin was pinched between a silicone rubber roll with a surface temperature of 40°C and a metal rigid roll with a surface temperature of 90°C, and the pinched resin was drawn out at 1 m/minute. From this, a layered product with a width of 30 cm and a thickness of 250 μm was obtained. The thickness of the base layer and the pressure sensitive adhesive layer was controlled by extrusion flow rate of the resins, and the thickness of the pressure sensitive adhesive layer of 100 μm and the thickness of the base layer of 150 μm were obtained.

<Example 1A>

The methacrylic resin (F) described in Production Example 1 and the block copolymer (A-1) to become a pressure sensitive adhesive layer described in Synthetic Example 4 were heat pressed at 200°C according to the heat press method mentioned above to make a layered product. Evaluation results of the resulting layered product are shown in Table 2.

Fig. 2A shows a cross section of such a layered product, taken by TEM (a transmission electron microscope). A base layer 10 comprising the methacrylic resin (F) is observed. In addition, in the pressure sensitive adhesive layer, an aromatic phase 14 comprising a styrene polymer block of the block copolymer (A-1) forms a membrane structure 17 and a circular cross section structure 18.

<Example 1B>

By dissolving the block copolymer (A-1) to become a pressure sensitive adhesive layer described in Synthetic Example 4 in toluene, a 30 mass% solution was obtained. This solution was applied onto a sheet comprising the methacrylic resin (F) described in Production Example 1 at 25°C, and the sheet was dried at 25°C to make a layered product. Evaluation results of the resulting layered product are shown in Table 2.

Fig. 2B shows (two) cross sections of such a layered product, taken by TEM (a transmission electron microscope). A base layer 10 comprising the methacrylic resin (F) is observed. In addition, in the pressure sensitive adhesive layer, an aromatic phase 14 comprising a styrene polymer block of the block copolymer (A-1) forms a membrane structure 17 and a circular cross section structure 18.

<Example 2>

In Example 2, a layered product was made in the same way as Example 1A except that the block copolymer (A-1) to become a pressure sensitive adhesive layer described in Synthetic Example 4 was changed to the block copolymer (A-2) described in Synthetic Example 5. Evaluation results of the resulting layered product are shown in Table 2.

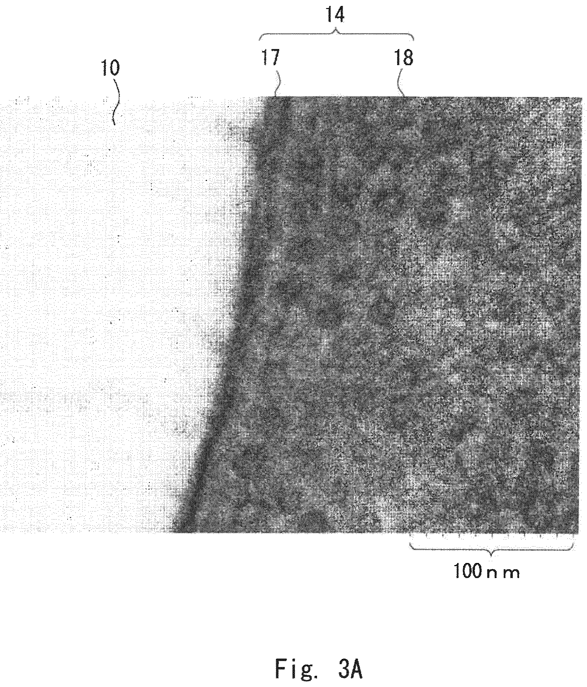

Fig. 3A shows a cross section of the layered product of Example 2, taken by TEM (a transmission electron microscope). A base layer 10 comprising the methacrylic resin (F) is observed. In addition, in the pressure sensitive adhesive layer shown in Fig. 3A, an aromatic phase 14 comprising a styrene polymer block of the block copolymer (A-2) forms a membrane structure 17 and a circular cross section structure 18.

<Example 3A>

In Example 3A, a layered product was made in the same way as Example 1A except that the block copolymer (A-1) to become a pressure sensitive adhesive layer described in Synthetic Example 4 was changed to the block copolymer (A-3) described in Synthetic Example 6. However, the heat press was performed at a temperature of 220°C. Evaluation results of the resulting layered product are shown in Table 2.

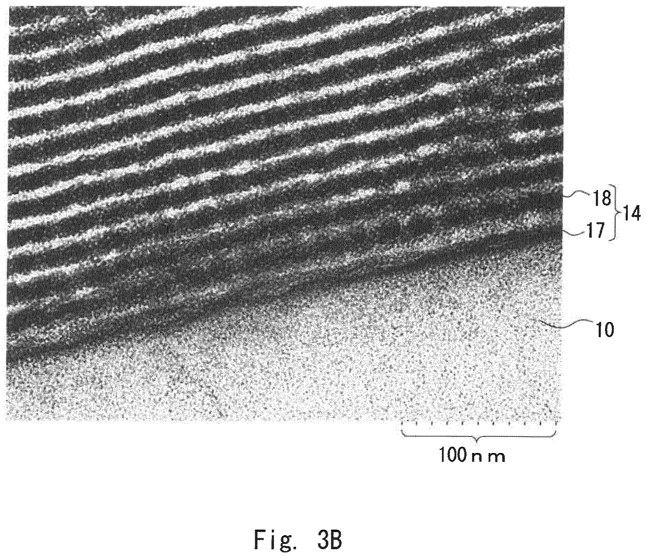

Fig. 3B shows a cross section of the layered product of Example 3A, taken by TEM (a transmission electron microscope). A base layer 10 comprising the methacrylic resin (F) is observed. In addition, in the pressure sensitive adhesive layer shown in Fig. 3B, an aromatic phase 14 comprising a styrene polymer block of the block copolymer (A-3) forms a membrane structure 17 and a circular cross section structure 18.

<Example 3B>

In Example 3B, a layered product was made in the same way as Example 3A except that the heat press was performed at a temperature of 200°C. Evaluation results of the resulting layered product are shown in Table 2.

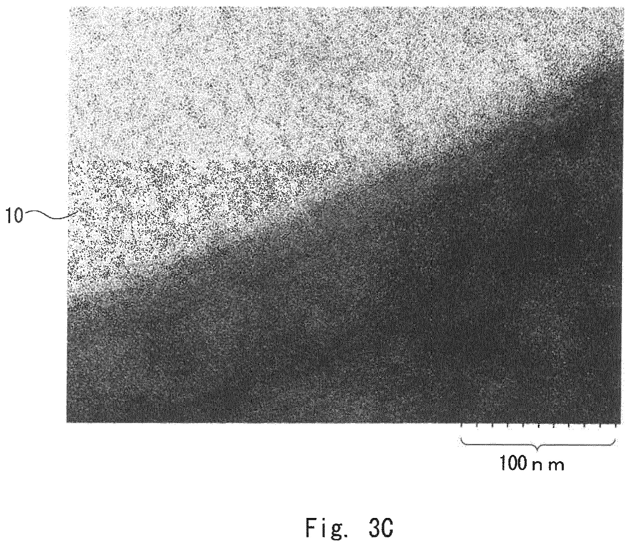

Fig. 3C shows a cross section of the layered product of Example 3B, taken by TEM (a transmission electron microscope). A base layer 10 comprising the methacrylic resin (F) is observed. However, in the pressure sensitive adhesive layer shown in Fig. 3C, it is hard to confirm the formation of a membrane structure and a circular cross section structure in an aromatic phase comprising a styrene polymer block of the block copolymer (A-3). According to this, the evaluation of TEM was determined to be B.

<Example 4>

Using a twin screw extruder, 80 parts by mass of the block copolymer (A-1) obtained by Synthetic Example 4 and 20 parts by mass of the adhesion imparting component (B) obtained by Synthetic Example 7 were melt kneaded at 230°C, and then extruded in strands and cut into resin pellets to become a pressure sensitive adhesive layer. In Example 4, a layered product was made in the same way as Example 1A except that the block copolymer (A-1) to become a pressure sensitive adhesive layer described in Synthetic Example 4 was changed to such pellets. Evaluation results of the resulting layered product are shown in Table 2.

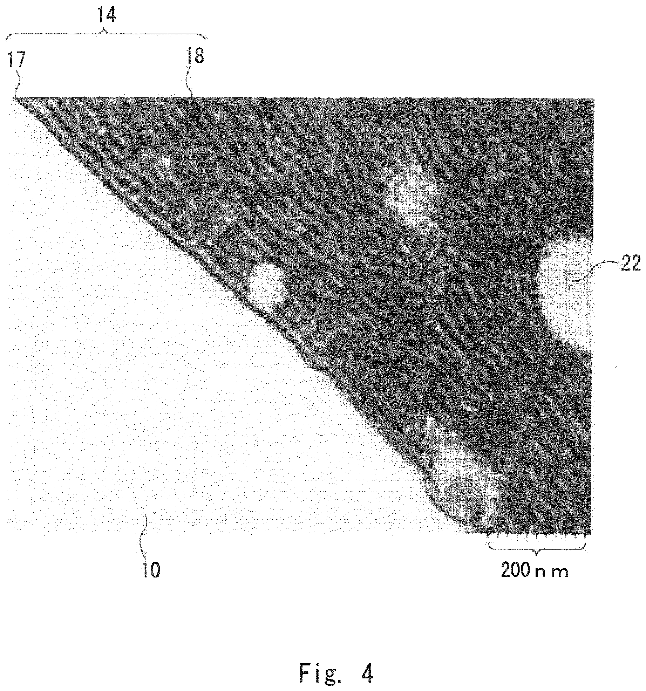

Fig. 4 shows a cross section of the layered product, taken by TEM (a transmission electron microscope). A base layer 10 comprising the methacrylic resin (F) is observed. In addition, in the pressure sensitive adhesive layer, an aromatic phase 14 comprising a styrene polymer block of the block copolymer (A-1) forms a membrane structure 17 and a circular cross section structure 18. In a part of the pressure sensitive adhesive layer, a lump 22 of the adhesion imparting component (B) is present.

<Example 5>

In Example 5, a layered product was made in the same way as Example 4 except that the temperature upon lamination of the pressure sensitive adhesive layer material and the base layer material was changed from 200°C to 240°C. Evaluation results of the resulting layered product are shown in Table 2.

<Example 6>

In Example 6, a layered product was made in the same way as Example 4 except that the temperature upon lamination of the pressure sensitive adhesive layer material and the base layer material was changed from 200°C to 150°C. Evaluation results of the resulting layered product are shown in Table 2.

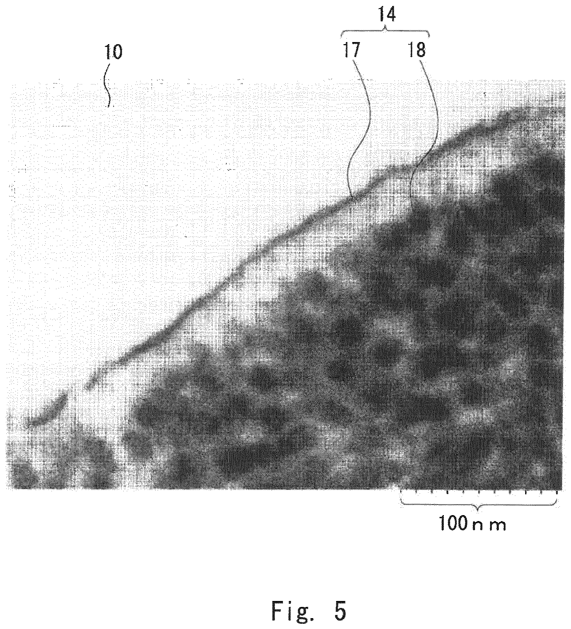

Fig. 5 shows a cross section of the layered product, taken by TEM (a transmission electron microscope). A base layer 10 comprising the methacrylic resin (F) is observed. In addition, in the pressure sensitive adhesive layer, an aromatic phase 14 comprising the block copolymer (A-1) forms a membrane structure 17 and a circular cross section structure 18, but a region 19 is under formation and the circular cross section structure 18 is partially present.

<Example 7>

Using a twin screw extruder, 80 parts by mass of the block copolymer (A-1) obtained by Synthetic Example 4 and 20 parts by mass of the adhesion imparting component (B) obtained by Synthetic Example 7 were melt kneaded at 230°C, and then extruded in strands and cut. From the above, resin pellets to become a pressure sensitive adhesive layer were obtained. Such pellets and the (meth)acrylic resin (M-1) described in Production Example 2 were molded by the coextrusion mentioned above to obtain a layered product. Furthermore, while performing heat stretch forming at 130°C by the TOM molding mentioned above, this layered product was pasted to an adherend.

<Example 8>

In Example 8, a layered product was obtained in the same way as Example 7 except that the (meth)acrylic resin (F) was changed to the (meth)acrylic resin (M-2) described in Production Example 3. Evaluation results of the resulting layered product are shown in Table 2. Furthermore, while performing heat stretch forming at 130°C by the TOM molding mentioned above, this layered product was pasted to an adherend.

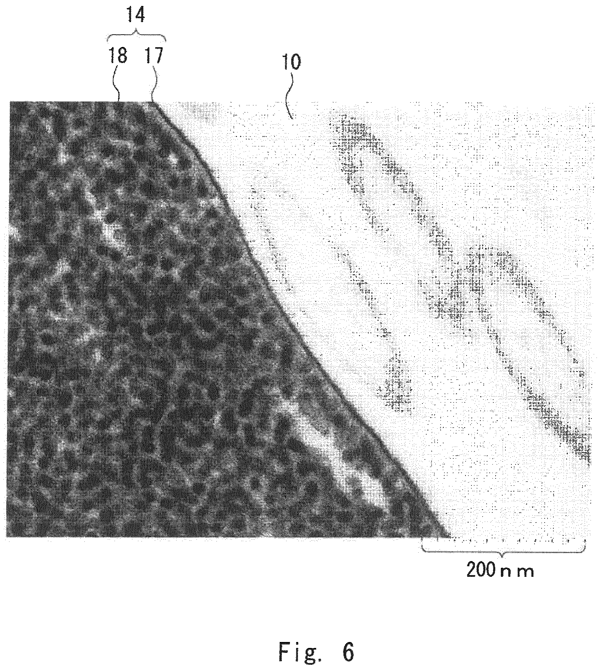

Fig. 6 shows an image of a cross section of the layered product after being pasted to the adherend by the TOM molding, taken by TEM (a transmission electron microscope). A base layer 10 comprising the (meth)acrylic resin (M-2) is observed. In addition, in the pressure sensitive adhesive layer, an aromatic phase 14 comprising the block copolymer (A-1) forms a membrane structure 17 and a circular cross section structure 18.

<Example 9A>

Using a twin screw extruder, 70 parts by mass of the block copolymer (A-1) obtained by Synthetic Example 4 and 30 parts by mass of the adhesion imparting component (B) obtained by Synthetic Example 7 were melt kneaded at 230°C, and then extruded in strands and cut into resin pellets to become a pressure sensitive adhesive layer. Such pellets and the (meth)acrylic resin (M-1) described in Production Example 2 were heat pressed at 200°C according to the heat press method mentioned above to make a layered product. Evaluation results of the resulting layered product are shown in Table 2.

<Example 9B>

Using a twin screw extruder, 50 parts by mass of the block copolymer (A-1) obtained by Synthetic Example 4 and 50 parts by mass of the adhesion imparting component (B) obtained by Synthetic Example 7 were melt kneaded at 230°C, and then extruded in strands and cut into resin pellets to become a pressure sensitive adhesive layer. Such pellets and the (meth)acrylic resin (M-1) described in Production Example 2 were heat pressed at 200°C according to the heat press method mentioned above to make a layered product. Evaluation results of the resulting layered product are shown in Table 2.

<Example 10>

Using a twin screw extruder, 70 parts by mass of the block copolymer (A-1) obtained by Synthetic Example 4, 5 parts by mass of a compatibiliser (manufactured by NOF CORPORATION, product name: MODIPER MS10B, [another thermoplastic polymer]), 2.5 parts by mass of a (meth)acrylic resin (manufactured by Kuraray Co., Ltd., product name: PARAPET HRS, [another thermoplastic polymer]) and 22.5 parts by mass of a polypropylene resin (manufactured by Prime Polymer Co., Ltd., product name: Prime Polypro J229E, [another thermoplastic polymer]) were melt kneaded at 230°C, and then extruded in strands and cut into resin pellets to become a pressure sensitive adhesive layer. Such pellets and the (meth)acrylic resin (M-1) described in Production Example 2 were heat pressed at 200°C according to the heat press method mentioned above to make a layered product. Evaluation results of the resulting layered product are shown in Table 2.

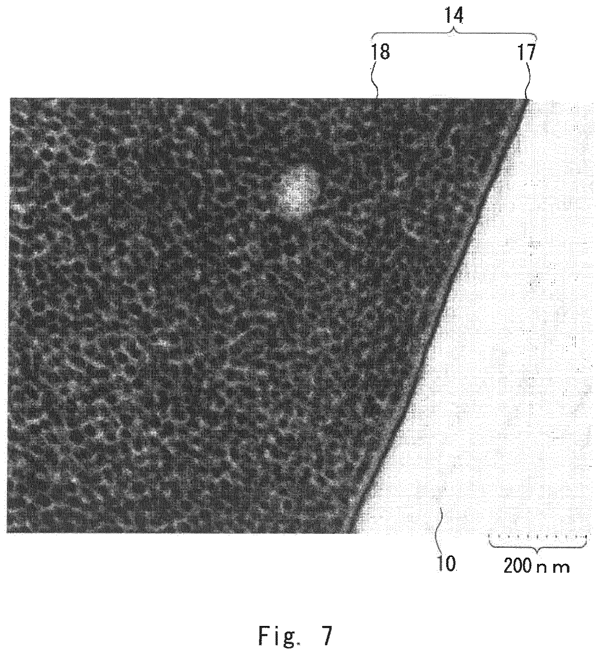

Fig. 7 shows a cross section of the layered product, taken by TEM (a transmission electron microscope). A base layer 10 comprising the (meth)acrylic resin (M-1) is observed. In addition, in the pressure sensitive adhesive layer, an aromatic phase 14 comprising a styrene polymer block of the block copolymer (A-1) forms a membrane structure 17 and a circular cross section structure 18.

<Example 11>

Using a twin screw extruder, 72.5 parts by mass of the block copolymer (A-1) obtained by Synthetic Example 4, 7.5 parts by mass of a (meth)acrylic resin (manufactured by Kuraray Co., Ltd., product name: PARAPET HRS, [another thermoplastic polymer]) and 20 parts by mass of a polypropylene resin (manufactured by Japan Polypropylene Corporation, product name: WINTEC WFX4TA, [another thermoplastic polymer]) were melt kneaded at 230°C, and then extruded in strands and cut into resin pellets to become a pressure sensitive adhesive layer. Such pellets and the (meth) acrylic resin (M-2) described in Production Example 3 were heat pressed at 200°C according to the heat press method mentioned above to make a layered product. Evaluation results of the resulting layered product are shown in Table 2.

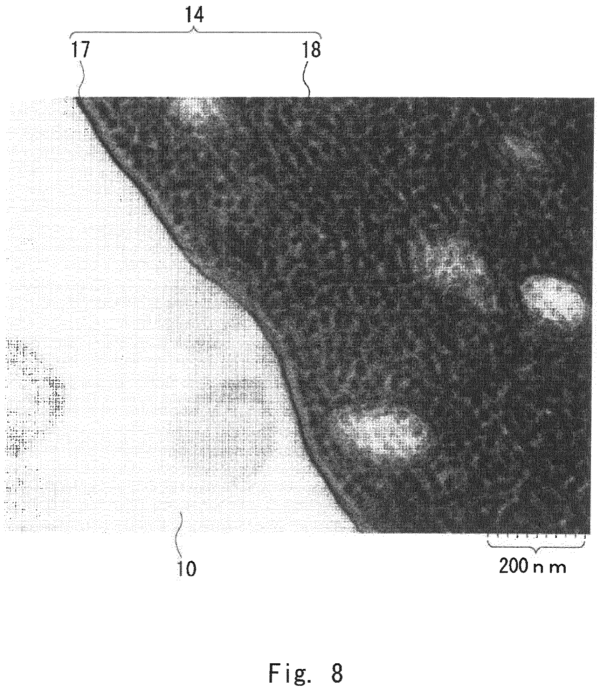

Fig. 8 shows a cross section of the layered product, taken by TEM (a transmission electron microscope). A base layer 10 comprising the (meth)acrylic resin (M-2) is observed. In addition, in the pressure sensitive adhesive layer, an aromatic phase 14 comprising a styrene polymer block of the block copolymer (A-1) forms a membrane structure 17 and a circular cross section structure 18.

<Example 12> (Reference Example)

The block copolymer (A-1) obtained by Synthetic Example 4 and an acrylonitrile-butadiene-styrene resin (manufactured by Asahi Kasei Corporation, product name: STYLAC 220S27) were heat pressed at 200°C according to the heat press method mentioned above to make a layered product. Evaluation results of the resulting layered product are shown in Table 2.

<Example 13> (Reference Example)

The block copolymer (A-1) obtained by Synthetic Example 4 and a polyethylene terephthalate resin (manufactured by Kuraray Co., Ltd., product name: Kurapet KS710B-8S) were heat pressed at 200°C according to the heat press method mentioned above to make a layered product. Evaluation results of the resulting layered product are shown in Table 2.

<Example 14> (Reference Example)

The block copolymer (A-3) obtained by Synthetic Example 6 and a polyethylene terephthalate resin (manufactured by Kuraray Co., Ltd., product name: Kurapet KS710B-8S) were heat pressed at 200°C according to the heat press method mentioned above to make a layered product. Evaluation results of the resulting layered product are shown in Table 2.

<Comparative Example 1>

In Comparative Example 1, a layered product was made in the same way as Example 4 except that the temperature upon lamination of the pressure sensitive adhesive layer material and the base layer material was changed from 200°C to 140°C. Evaluation results of the resulting layered product are shown in Table 2. Note that, upon the attempt to observe a cross section of the layered product using TEM, peel strength between the pressure sensitive adhesive layer and the base layer was low, and thus the pressure sensitive adhesive layer and the base layer were peeled off while making a slice. Therefore, it was impossible to make a slice and to conduct observation.

<Comparative Example 2>

Using a twin screw extruder, 30 parts by mass of the block copolymer (A-1) obtained by Synthetic Example 4 and 70 parts by mass of the adhesion imparting component (B) obtained by Synthetic Example 7 were melt kneaded at 230°C, and then extruded in strands and cut into resin pellets to become a pressure sensitive adhesive layer. Such pellets and the (meth)acrylic resin (M-1) described in Production Example 2 were heat pressed at 200°C according to the heat press method mentioned above to make a layered product. Note that, upon the attempt to observe a cross section of the layered product using TEM, peel strength between the pressure sensitive adhesive layer and the base layer was low, and thus the pressure sensitive adhesive layer and the base layer were peeled off while making a slice. Therefore, it was impossible to make a slice and to conduct observation.

<Reference Example 1>

The block copolymer (A-1) obtained by Synthetic Example 4 and a cycloolefin polymer resin (manufactured by ZEON CORPORATION, product name: ZEONOR 1020R) were heat pressed at 200°C according to the heat press method mentioned above to make a layered product. Evaluation results of the resulting layered product are shown in Table 2.

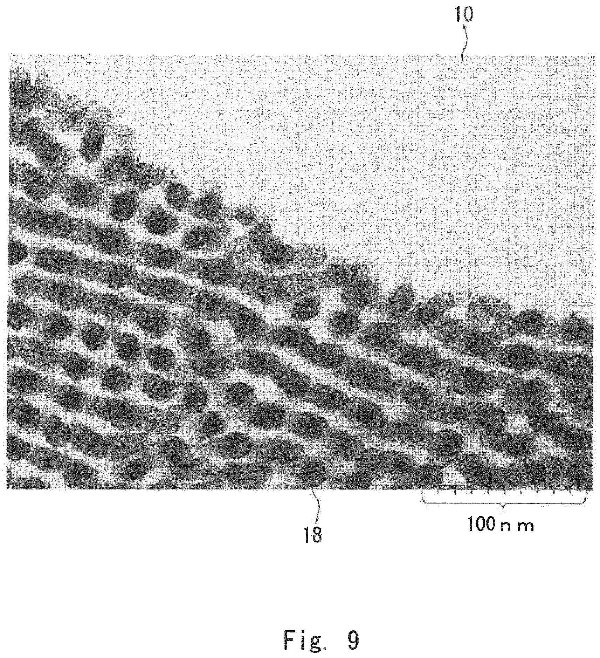

Fig. 9 shows a cross section of the layered product, taken by TEM (a transmission electron microscope). A base layer 10 comprising the cycloolefin polymer resin is observed. In the pressure sensitive adhesive layer, an aromatic phase comprising a styrene polymer block of the block copolymer (A-1) forms a circular cross section structure 18, but a membrane structure was not observed. From the comparison to Example 1, this is believed to be because the base layer comprises a nonpolar resin. Therefore, it was found that an appropriate combination of the composition of the pressure sensitive adhesive layer and the composition of the base layer is important for the formation of the membrane structure.
On the other hand, a part of a diene phase 15 is compatible with the cycloolefin polymer resin, and thus the evaluation of TEM was C, but the peel strength was high. That is, it was found that the pressure sensitive adhesive layer that the layered product of the present disclosure has a high pressure sensitive adhesiveness not only to a polar resin, but also to a nonpolar resin.

<Reference Example 2>

The block copolymer (A-3) obtained by Synthetic Example 6 and a cycloolefin polymer resin (manufactured by ZEON CORPORATION, product name: ZEONOR 1020R) were heat pressed at 200°C according to the heat press method mentioned above to make a layered product. Evaluation results of the resulting layered product are shown in Table 2.

<Reference Example 3>

Using a twin screw extruder, 80 parts by mass of the block copolymer (A-1) obtained by Synthetic Example 4 and 20 parts by mass of the adhesion imparting component (B) obtained by Synthetic Example 7 were melt kneaded at 230°C, and then extruded in strands and cut into resin pellets to become a pressure sensitive adhesive layer. Such pellets and a polypropylene resin (manufactured by Japan Polypropylene Corporation, product name: MA3) were heat pressed at 200°C according to the heat press method mentioned above to make a layered product. Evaluation results of the resulting layered product are shown in Table 2.

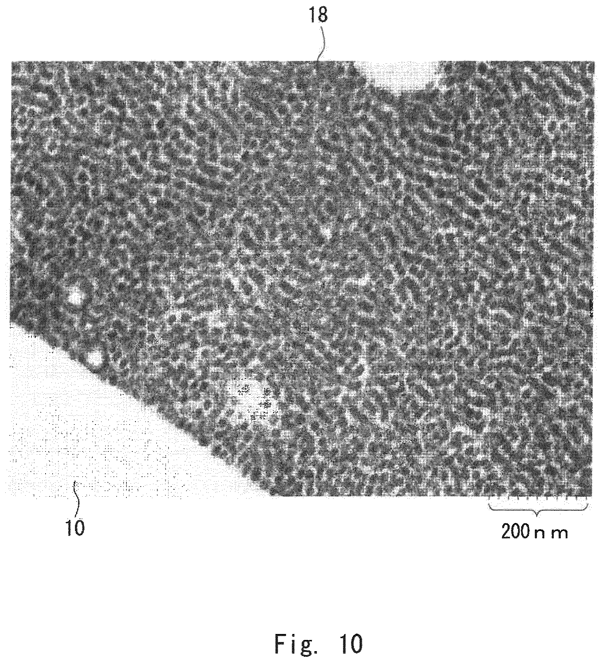

Fig. 10 shows a cross section of the layered product, taken by TEM (a transmission electron microscope). A base layer 10 comprising the polypropylene resin is observed. In the pressure sensitive adhesive layer, an aromatic phase 14 comprising a styrene polymer block of the block copolymer (A-1) forms a circular cross section structure 18. However, a membrane structure 17 of the aromatic phase was not observed. From the comparison to Example 4, this is believed to be because the base layer comprises a nonpolar resin. Therefore, it was found that an appropriate combination of the composition of the pressure sensitive adhesive layer and the composition of the base layer is important for the formation of the membrane structure.
On the other hand, a part of a diene phase 15 is compatible with the polypropylene resin, and thus the evaluation of TEM was C, but the peel strength was high. That is, it was found that the pressure sensitive adhesive layer that the layered product of the present disclosure has has a high pressure sensitive adhesiveness not only to a polar resin, but also to a nonpolar resin.

[Table 2]

| | Examples | | | | | | | | | | | | | | | | | Comparative Examples | | Reference Examples | | |
|---|---|---|---|---|---|---|---|---|---|---|---|---|---|---|---|---|---|---|---|---|---|---|
| | 1A | 1B | 2 | 3A | 3B | 4 | 5 | 6 | 7 | 8 | 9A | 9B | 10 | 11 | 12 | 13 | 14 | 1 | 2 | 1 | 2 | 3 |
| Base layer | F | F | F | F | F | F | F | F | M-1 | M-2 | M-1 | M-1 | M-1 | M-2 | ABS | PET | PET | F | M-1 | COP | COP | PP |
| A-1 | 100 | 100 | | | | 80 | 80 | 80 | 80 | 80 | 70 | 50 | 70 | 72.5 | 100 | 100 | | 80 | 30 | 100 | | 80 |
| A-2 | | | 100 | | | | | | | | | | | | | | 100 | | | | 100 | |
| A-3 | | | | 100 | 100 | | | | | | | | | | | | | | | | | 20 |
| B | | | | | | 20 | 20 | 20 | 20 | 20 | 30 | 50 | | | | | | 20 | 70 | | | |
| MS10B | | | | | | | | | | | | | 5 | | | | | | | | | |
| HRS | | | | | | | | | | | | | 2.5 | 7.5 | | | | | | | | |
| J229E | | | | | | | | | | | | | 22.5 | | | | | | | | | |
| WFX4TA | | | | | | | | | | | | | | 20 | | | | | | | | |
| Lamination methods | HP | SC | HP | HP | HP | HP | HP | HP | CE | CE | HP | HP | HP | CE | HP | HP | HP | HP | HP | HP | HP | HP |
| Lamination temperature [°C] | 200 | 25 | 200 | 220 | 200 | 200 | 240 | 150 | 240 | 240 | 200 | 200 | 200 | 240 | 200 | 200 | 200 | 140 | 200 | 200 | 200 | 200 |
| $R_j / R_c$ | 1.47 | | | | 2.31 | 1.68 | | 1.46 | 1.68 | | | | 1.6 | | 1.78 | 1.35 | 2.31 | 0.95 | | | 0.61 | |
| TEM | A | A | A | A | B | A | A | A | A | A | A | A | A | A | | | | – | – | C | | C |
| Peel strength [N/25 mm] | 30 | 35 | 20 | 11 | 9 | 49 | 32 | 10 | 18 | 50 | 50 | 10 | 39 | 29 | 20 | 10 | 10 | 5 | 5 | 25 | | |

In Table 2, a row of "Base layer" indicates a resin used for a base layer. "F" is the methacrylic resin (F) from Production Example 1. "M-1" is the (meth)acrylic resin (M-1) from Production Example 2. "M-2" is the (meth)acrylic resin (M-2) from Production Example 3. "ABS" is an acrylonitrile-butadiene-styrene (ABS) resin. "PET" is a polyethylene terephthalate (PET) resin. "COP" is a cycloolefin polymer (COP) resin. "PP" is a polypropylene (PP) resin.

"A-1" to "A-3" are the block copolymers (A-1) to (A-3) obtained by Synthetic Examples 4 to 6, respectively. "B" is an adhesion imparting component (B) used for a pressure sensitive adhesive layer. "MS10B" is MODIPER MS10B manufactured by NOF CORPORATION, used for a pressure sensitive adhesive layer. "HRS" is PARAPET HRS manufactured by Kuraray Co., Ltd., used for a pressure sensitive adhesive layer. "J229E" is Prime Polypro J229E manufactured by Prime Polymer Co., Ltd., used for a pressure sensitive adhesive layer. "WFX4TA" is WINTEC WFX4TA manufactured by Japan Polypropylene Corporation, used for a pressure sensitive adhesive layer.

"HP" in a row for lamination methods is a heat press method. "CE" is a coextrusion method. "SC" is a solvent coating method. "$R_j/R_c$" is a ratio of $R_j$ to $R_c$, obtained by the analysis through TOF-SIMS. "TEM" is an evaluation result obtained by the observation through TEM.

In Table 2, Examples 12 to 14 are also Reference Examples.

## Reference Signs List

10: Base layer, 11: Pressure sensitive adhesive layer, 12: Interface, 13: Adhesive surface, 14: Aromatic phase, 15: Diene phase, 16: Surface, 17: Membrane structure 18: Circular cross section structure, 19: Region, 20: Layered product, and 22: Lump of adhesion imparting component (B)

## Claims

1. A layered product comprising:

   a base layer; and
   a pressure sensitive adhesive layer, which is in contact with the base layer, wherein
   the base layer comprises a (meth)acrylic resin (M),
   the pressure sensitive adhesive layer contains a block copolymer (A) containing an aromatic vinyl compound polymer block (S) and a conjugated diene compound polymer block (D),
   a membrane structure phase comprising the aromatic vinyl compound polymer block (S) is formed along an interface between the base layer and the pressure sensitive adhesive layer, which is confirmed by observation with a transmission electron microscope (TEM) or analysis with secondary ion mass spectrometry (SIMS),
   the (meth)acrylic resin (M) contains 10 mass% or more of a methacrylic resin (F),
   the methacrylic resin (F) contains 80 mass% or more of structural units derived from methyl methacrylate, and
   the pressure sensitive adhesive layer contains greater than 50 mass% of the block copolymer (A).

2. The layered product according to Claim 1, wherein

   a circular cross section structure phase is further formed by the aromatic vinyl compound polymer block (S), and
   the pressure sensitive adhesive layer has a region in which the circular cross section structure phase is scarce along the membrane structure phase.

3. The layered product according to Claim 1 or 2, wherein a vinylation degree of the conjugated diene compound polymer block (D) is 40 mol% or more in the block copolymer (A).

4. The layered product according to any of Claims 1 to 3, wherein the block copolymer (A) contains 5 to 40 mass% of the aromatic vinyl compound polymer block (S) and 60 to 95 mass% of the conjugated diene compound polymer block (D).

5. The layered product according to any of Claims 1 to 4, wherein the pressure sensitive adhesive layer further contains an adhesion imparting component (B), and
   the adhesion imparting component (B) is a polar group containing polypropylene resin.

6. The layered product according to any of Claims 1 to 5, wherein a content of a tackifier (aD) in the pressure sensitive adhesive layer is less than 1 part by mass relative to 100 parts by mass of the block copolymer (A).

7. The layered product according to any of Claims 1 to 6, wherein the conjugated diene compound polymer block (D) does not have a polar group.

8. The layered product according to any of Claims 1 to 7, wherein the conjugated diene compound polymer block (D) contains structural units derived from at least any one of isoprene and butadiene.

9. The layered product according to any one of Claims 1 to 8, wherein

the (meth)acrylic resin (M) contains 10 to 99 mass% of a methacrylic resin (F) and 1 to 90 mass% of an elastic body component (R), and
the elastic body component (R) contains a block copolymer (G) comprising 10 to 80 mass% of a methacrylate ester polymer block (g1) and 20 to 90 mass% of an acrylate ester polymer block (g2).

10. The layered product according to any one of Claims 1 to 9, wherein

the (meth)acrylic resin (M) contains 10 to 99 mass% of a methacrylic resin (F) and 1 to 90 mass% of an elastic body component (R),
the elastic body component (R) forms a multilayer structural body (E) having an outer layer (e1) and an inner layer (e2),
the outer layer (e1) contains 80 mass% or more of structural units derived from methyl methacrylate, and
the inner layer (e2) contains 70 to 99.8 mass% of structural units derived from alkyl acrylate ester and 0.2 to 30 mass% of structural units derived from a crosslinkable monomer.

11. The layered product according to any of Claims 1 to 10, wherein

the pressure sensitive adhesive layer has an adhesive surface on an opposite side of the base layer,
the block copolymer (A) contains 5 to 40 mass% of the aromatic vinyl compound polymer block (S) and 60 to 95 mass% of the conjugated diene compound polymer block (D), and
a peel strength is 20 N/25 mm or more when the adhesive layer is closely adhered to a polypropylene resin, the peel strength being determined according to the method indicated in the description.

12. A method of producing, by press molding or coextrusion molding, a layered product comprising a base layer and a pressure sensitive adhesive layer, which is in contact with the base layer, wherein

the base layer comprises a (meth)acrylic resin (M),
the pressure sensitive adhesive layer contains a block copolymer (A) containing an aromatic vinyl compound polymer block (S) and a conjugated diene compound polymer block (D),
a membrane structure phase of the aromatic vinyl compound polymer block (S) is formed along an interface between the base layer and the pressure sensitive adhesive layer, which is confirmed by observation with a transmission electron microscope (TEM) or analysis with secondary ion mass spectrometry (SIMS),
the (meth)acrylic resin (M) contains 10 mass% or more of a methacrylic resin (F),
the methacrylic resin (F) contains 80 mass% or more of structural units derived from methyl methacrylate, and
the pressure sensitive adhesive layer contains greater than 50 mass% of the block copolymer (A).

**Patentansprüche**

1. Schichtprodukt, umfassend:

eine Basisschicht; und
eine druckempfindliche Haftmittelschicht, die in Kontakt mit der Basisschicht steht, wobei
die Basisschicht ein (Meth)acrylharz (M) umfasst,
die druckempfindliche Haftmittelschicht ein Blockcopolymer (A) enthält, das einen aromatischen Vinylverbindungspolymerblock (S) und einen konjugierten Dienverbindungspolymerblock (D) enthält,
eine Membranstrukturphase, die den aromatischen Vinylverbindungspolymerblock (S) umfasst, entlang einer Grenzfläche zwischen der Basisschicht und der druckempfindlichen Haftmittelschicht gebildet ist, was durch Beobachtung mit einem Transmissionselektronenmikroskop (TEM) oder Analyse mit Sekundärionen-Massenspektrometrie (SIMS) bestätigt wird,
das (Meth)acrylharz (M) 10 Massen-% oder mehr eines Methacrylharzes (F) enthält,

das Methacrylharz (F) 80 Massen-% oder mehr von Methylmethacrylat abgeleitete Struktureinheiten enthält, und die druckempfindliche Haftmittelschicht mehr als 50 Massen-% des Blockcopolymers (A) enthält.

2. Schichtprodukt nach Anspruch 1, wobei

eine kreisförmige Querschnittsstrukturphase weiter durch den aromatischen Vinylverbindungspolymerblock (S) gebildet wird, und
die druckempfindliche Haftmittelschicht einen Bereich aufweist, in dem die kreisförmige Querschnittsstrukturphase entlang der Membranstrukturphase geringfügig ist.

3. Schichtprodukt nach Anspruch 1 oder 2, wobei ein Vinylierungsgrad des konjugierten Dienverbindungspolymerblocks (D) 40 Mol-% oder mehr in dem Blockcopolymer (A) beträgt.

4. Schichtprodukt nach einem der Ansprüche 1 bis 3, wobei das Blockcopolymer (A) 5 bis 40 Massen-% des aromatischen Vinylverbindungspolymerblocks (S) und 60 bis 95 Massen-% des konjugierten Dienverbindungspolymerblocks (D) enthält.

5. Schichtprodukt nach einem der Ansprüche 1 bis 4, wobei die druckempfindliche Haftmittelschicht weiter eine haftvermittelnde Komponente (B) enthält, und
die haftvermittelnde Komponente (B) ein polare Gruppe enthaltendes Polypropylenharz ist.

6. Schichtprodukt nach einem der Ansprüche 1 bis 5, wobei ein Gehalt an einem Klebrigmacher (aD) in der druckempfindlichen Haftmittelschicht weniger als 1 Masseteil, bezogen auf 100 Masseteile des Blockcopolymers (A), beträgt.

7. Schichtprodukt nach einem der Ansprüche 1 bis 6, wobei der konjugierte Dienverbindungspolymerblock (D) keine polare Gruppe aufweist.

8. Schichtprodukt nach einem der Ansprüche 1 bis 7, wobei der konjugierte Dienverbindungspolymerblock (D) Struktureinheiten enthält, die von mindestens einem von Isopren und Butadien abgeleitet sind.

9. Schichtprodukt nach einem der Ansprüche 1 bis 8, wobei

das (Meth)acrylharz (M) 10 bis 99 Massen-% eines Methacrylharzes (F) und 1 bis 90 Massen-% einer Elastikkörperkomponente (R) enthält, und
die Elastikkörperkomponente (R) ein Blockcopolymer (G) enthält, das 10 bis 80 Massen-% eines Methacrylatester-Polymerblocks (g1) und 20 bis 90 Massen-% eines Acrylatester-Polymerblocks (g2) umfasst.

10. Schichtprodukt nach einem der Ansprüche 1 bis 9, wobei

das (Meth)acrylharz (M) 10 bis 99 Massen-% eines Methacrylharzes (F) und 1 bis 90 Massen-% einer elastischen Körperkomponente (R) enthält,
die elastische Körperkomponente (R) einen mehrschichtigen Strukturkörper (E) mit einer Außenschicht (e1) und einer Innenschicht (e2) bildet,
die Außenschicht (e1) 80 Massen-% oder mehr von Methylmethacrylat abgeleitete Struktureinheiten enthält und
die Innenschicht (e2) 70 bis 99.8 Massen-% von Alkylacrylatester abgeleitete Struktureinheiten und 0,2 bis 30 Massen-% von einem vernetzbaren Monomer abgeleitete Struktureinheiten enthält.

11. Schichtprodukt nach einem der Ansprüche 1 bis 10, wobei

die druckempfindliche Haftmittelschicht eine Haftfläche auf einer der Basisschicht gegenüberliegenden Seite aufweist,
das Blockcopolymer (A) 5 bis 40 Massen-% des aromatischen Vinylverbindungspolymerblocks (S) und 60 bis 95 Massen-% des konjugierten Dienverbindungspolymerblock (D) enthält und
eine Schälfestigkeit 20 N/25 mm oder mehr beträgt, wenn die Haftmittelschicht eng an ein Polypropylenharz geklebt ist, wobei die Schälfestigkeit gemäß dem in der Beschreibung angegebenen Verfahren bestimmt wird.

12. Verfahren zur Herstellung eines Schichtprodukts, umfassend eine Basisschicht und eine druckempfindliche Haftmittelschicht, die mit der Basisschicht in Kontakt steht, durch Pressformen oder Coextrusionsformen, wobei

die Basisschicht ein (Meth)acrylharz (M) umfasst,
die druckempfindliche Haftmittelschicht ein Blockcopolymer (A) enthält, das einen aromatischen Vinylverbindungspolymerblock (S) und einen konjugierten Dienverbindungspolymerblock (D) enthält,
eine Membranstrukturphase des aromatischen Vinylverbindungspolymerblocks (S) entlang einer Grenzfläche zwischen der Basisschicht und der druckempfindlichen Haftmittelschicht gebildet wird, was durch Beobachtung mit einem Transmissionselektronenmikroskop (TEM) oder Analyse mit Sekundärionen-Massenspektrometrie (SIMS) bestätigt wird,
das (Meth)acrylharz (M) 10 Massen-% oder mehr eines Methacrylharzes (F) enthält,
das Methacrylharz (F) 80 Massen-% oder mehr von Methylmethacrylat abgeleitete Struktureinheiten enthält, und
die druckempfindliche Haftmittelschicht mehr als 50 Massen-% des Blockcopolymers (A) enthält.

**Revendications**

1.  Produit stratifié comprenant :

    une couche de base ; et
    une couche d'adhésif sensible à la pression qui est en contact avec la couche de base, dans lequel
    la couche de base comprend une résine (méth)acrylique (M),
    la couche d'adhésif sensible à la pression contient un copolymère à blocs (A) contenant un bloc polymère de composé de vinyle aromatique (S) et un bloc polymère de composé de diène conjugué (D),
    une phase à structure de membrane comprenant le bloc polymère de composé de vinyle aromatique (S) est formée le long d'une interface entre la couche de base et la couche d'adhésif sensible à la pression, qui est confirmée par observation avec un microscope électronique en transmission (TEM) ou une analyse avec spectrométrie de masse des ions secondaires (SIMS),
    la résine (méth)acrylique (M) contient 10 % en masse ou plus d'une résine méthacrylique (F),
    la résine méthacrylique (F) contient 80 % en masse ou plus d'unités structurelles dérivées de méthacrylate de méthyle, et
    la couche d'adhésif sensible à la pression contient plus de 50 % en masse du copolymère à blocs (A).

2.  Produit stratifié selon la revendication 1, dans lequel

    une phase à structure à section transversale circulaire est en outre formée par le bloc polymère de composé de vinyle aromatique (S), et
    la couche d'adhésif sensible à la pression a une région dans laquelle la phase à structure à section transversale circulaire est rare le long de la phase à structure de membrane.

3.  Produit stratifié selon la revendication 1 ou 2, dans lequel un degré de vinylation du bloc polymère de composé de diène conjugué (D) est de 40 % en mol ou plus dans le copolymère à blocs (A).

4.  Produit stratifié selon l'une quelconque des revendications 1 à 3, dans lequel le copolymère à blocs (A) contient 5 à 40 % en masse du bloc polymère de composé de vinyle aromatique (S) et 60 à 95 % en masse du bloc polymère de composé de diène conjugué (D).

5.  Produit stratifié selon l'une quelconque des revendications 1 à 4, dans lequel la couche d'adhésif sensible à la pression contient en outre un composant conférant de l'adhésion (B), et
    le composant conférant de l'adhésion (B) est un groupe polaire contenant de la résine de polypropylène.

6.  Produit stratifié selon l'une quelconque des revendications 1 à 5, dans lequel une teneur en un agent poisseux (aD) dans la couche d'adhésif sensible à la pression est inférieure à 1 partie en masse par rapport à 100 parties en masse du copolymère à blocs (A).

7.  Produit stratifié selon l'une quelconque des revendications 1 à 6, dans lequel le bloc polymère de composé de diène conjugué (B) n'a pas de groupe polaire.

8.  Produit stratifié selon l'une quelconque des revendications 1 à 7, dans lequel le bloc polymère de composé de diène conjugué (D) contient des unités structurelles dérivées d'au moins l'un quelconque de l'isoprène et du butadiène.

9. Produit stratifié selon l'une quelconque des revendications 1 à 8, dans lequel la résine (méth)acrylique (M) contient 10 à 99 % en masse d'une résine méthacrylique (F) et 1 à 90 % en masse d'un composant à corps élastique (R), et le composant à corps élastique (R) contient un copolymère à blocs (G) comprenant 10 à 80 % en masse d'un bloc polymère d'ester de méthacrylate (g1) et 20 à 90 % en masse d'un bloc polymère d'ester d'acrylate (g2).

10. Produit stratifié selon l'une quelconque des revendications 1 à 9, dans lequel la résine (méth)acrylique (M) contient 10 à 99 % en masse d'une résine méthacrylique (F) et 1 à 90 % en masse d'un composant à corps élastique (R),

le composant à corps élastique (R) forme un corps structurel multicouche (E) ayant une couche externe (e1) et une couche interne (e2),

la couche externe (e1) contient 80 % en masse ou plus d'unités structurelles dérivées de méthacrylate de méthyle, et

la couche interne (e2) contient 70 à 99,8 % en masse d'unités structurelles dérivées d'ester d'acrylate d'alkyle et 0,2 à 30 % en masse d'unités structurelles dérivées d'un monomère réticulable.

11. Produit stratifié selon l'une quelconque des revendications 1 à 10, dans lequel la couche d'adhésif sensible à la pression a une surface adhésive sur un côté opposé de la couche de base,

le copolymère à blocs (A) contient 5 à 40 % en masse du bloc polymère de composé de vinyle aromatique (S) et 60 à 95 % en masse du bloc polymère de composé de diène conjugué (D), et

une résistance au pelage est de 20 N/25 mm ou plus lorsque la couche adhésive est étroitement collée à une résine de polypropylène, la résistance au pelage étant déterminée conformément au procédé indiqué dans la description.

12. Procédé de production, par moulage à la presse ou moulage par co-extrusion, d'un produit stratifié comprenant une couche de base et une couche d'adhésif sensible à la pression qui est en contact avec la couche de base, dans lequel la couche de base comprend une résine (méth)acrylique (M),

la couche d'adhésif sensible à la pression contient un copolymère à blocs (A) contenant un bloc polymère de composé de vinyle aromatique (S) et un bloc polymère de composé de diène conjugué (D),

une phase à structure de membrane comprenant le bloc polymère de composé de vinyle aromatique (S) est formée le long d'une interface entre la couche de base et la couche d'adhésif sensible à la pression, qui est confirmée par observation avec un microscope électronique en transmission (TEM) ou une analyse avec spectrométrie de masse des ions secondaires (SIMS),

la résine (méth)acrylique (M) contient 10 % en masse ou plus d'une résine méthacrylique (F),

la résine méthacrylique (F) contient 80 % en masse ou plus d'unités structurelles dérivées de méthacrylate de méthyle, et

la couche d'adhésif sensible à la pression contient plus de 50 % en masse du copolymère à blocs (A).

Fig. 1

Fig. 2A

Fig. 2B

Fig. 3A

Fig. 3B

Fig. 3C

Fig. 4

Fig. 5

Fig. 6

Fig. 7

Fig. 8

Fig. 9

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014156651 A1
- JP 2012236901 A
- WO 2014087815 A1
- US 20030211308 A1
- JP 2014168940 A
- JP 2012213911 A
- JP 2007507374 W
- JP H11131037 A
- JP H11286871 A
- JP 2002067137 A
- JP 2005262502 A
- JP 5809150 B